# EUROPEAN PATENT APPLICATION

(11) **EP 4 270 579 A2**
(43) Date of publication of application: **01.11.2023**
(21) Application number: 23165890.7
(22) Date of filing: 31.03.2023
(51) Int. Cl.: H01M 10/0565, H01M 10/0525, H01M 10/0568, H01M 10/0569

(54) **ELECTROLYTE COMPOSITION, QUASI-SOLID ELECTROLYTE AND LITHIUM-ION BATTERY EMPLOYING THE SAME**

(30) Priority: 27.04.2022 US 202263335452 P; 15.11.2022 TW 111143492
(71) Applicant: Industrial Technology Research Institute, Chutung, Hsinchu 310401 (TW)
(72) Inventor: Wang, Yun-Chi, Taichung City (TW); Lo, Jen-Chih, Hsinchu City (TW); Chang, Ya-Chi, Miaoli County (TW); Hung, Po-Yang, Yunlin County (TW); Yeh, Ting-Ju, Taipei City (TW)
(74) Representative: Fuchs Patentanwälte Partnerschaft mbB

(57) **Abstract**

An electrolyte composition, quasi-solid-state electrolyte, and lithium-ion battery employing the same are provided. The electrolyte composition includes a component (A), component (B) and component (C). The component (A) is a combination of a first polymer (A1) and a second polymer (A2), or a third polymer (A3). The first polymer (A1) has a repeating unit of Formula (I), the second polymer (A2) has a repeating unit of Formula (II), and the third polymer (A3) has a repeating unit of Formula (I) and a repeating unit of Formula (II) 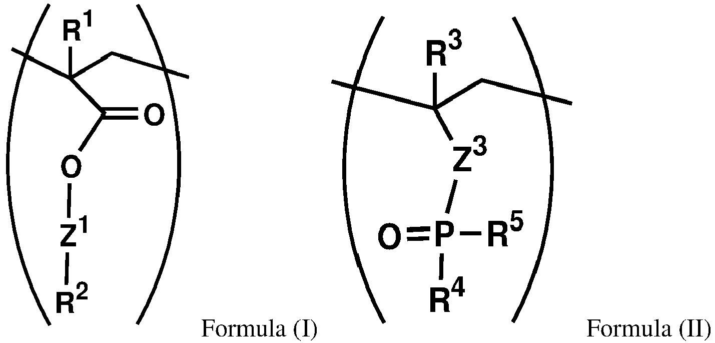 , wherein R¹, R², R³, R⁴, R⁵, Z¹, and Z³ are as defined in the specification. The component (B) is a lithium salt and the component (C) is a solvent.

## Description

### TECHNICAL FIELD

The disclosure relates to an electrolyte composition, quasi-solid electrolyte and lithium-ion battery employing the same.

### BACKGROUND

Lithium-ion secondary batteries are mainstream commercial products, and they are presently being developed to be light-weight, low-volume, and safer, and to have a higher energy capacity and a longer cycle life.

In conventional liquid electrolyte lithium-ion batteries, the energy storage cost per unit is high due to the low gravimetric energy density and the limited life cycle. However, unilaterally increasing the energy density of batteries can easily induce serial safety problems in electrochemical batteries, such as liquid leakage, battery swelling, heating, fuming, burning, explosion, and the like.

In addition, when improving the operating voltage of lithium ion battery, it is easy to accelerate the oxidation reaction of electrolyte, resulting in poor stability of the battery during high-voltage charging. Although the industry proposes to add a polymer as an electrolyte additive to improve stability, the conventional polymer used in electrolytes has a high interfacial impedance in the electrolyte system, and does not have effective flame retardant property.

Therefore, a novel design of an electrolyte used in lithium-ion batteries is called for to solve the aforementioned problems.

### SUMMARY

According to embodiments of the disclosure, the disclosure provides an electrolyte composition, wherein the electrolyte composition may become a quasi-solid electrolyte, which is used in batteries, prepared from a ring-opening polymerization. The electrolyte composition may include component (A), component (B), and component (C), wherein the amount of component (A) is 1wt% to 10wt%, based on the total weight of component (A), component (B), and component (C). The component (A) may be a combination of a first polymer (A1) and a second polymer (A2), or the component (A) may be a third polymer (A3). The first polymer (A1) may have a repeating unit of Formula (I), the second polymer (A2) may have a repeating unit of Formula (II), and the third polymer (A3) may have a repeating unit of Formula (I) and a repeating unit of Formula (II) 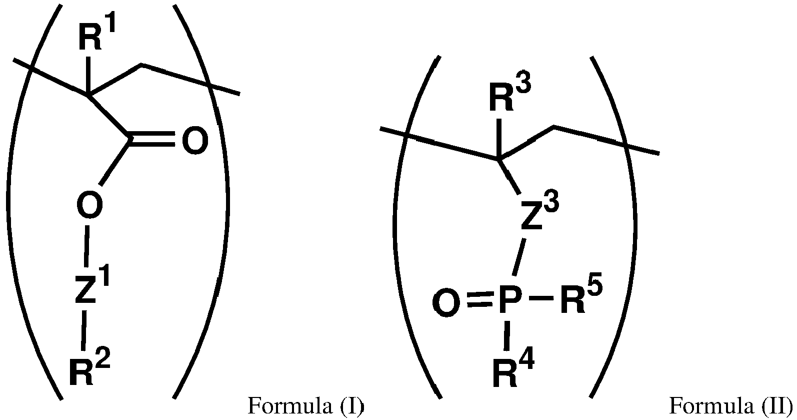 , wherein R¹ may be hydrogen or methyl group; R² may be oxiranyl group, methyloxiranyl group, glycidyl group, methylglycidyl group, oxetanyl group, or (3,4-epoxycyclohexyl)methyl group; Z¹ may be C₁₋₁₀ alkylene group, 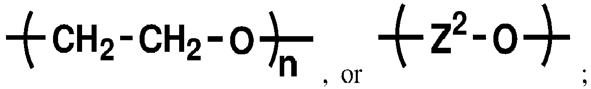 n>1; Z² may be C₁₋₁₀ alkylene group; R³ may be hydrogen or methyl group; R⁴ and R⁵ may be independently C₁₋₁₀ alkyl group, C₁₋₁₀ alkoxy group, C₄₋₈ cycloalkyl group, C₄₋₈ cycloalkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group, or R⁴ may be substituted or non-substituted phenyl group and R⁵ may be substituted or non-substituted phenoxy group and R⁴ and R⁵ may be combined with the phosphorous atom which they are attached to, to form a 6-membered ring; Z³ may be C₁₋₁₀ alkylene group, 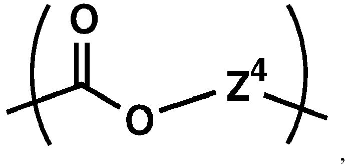 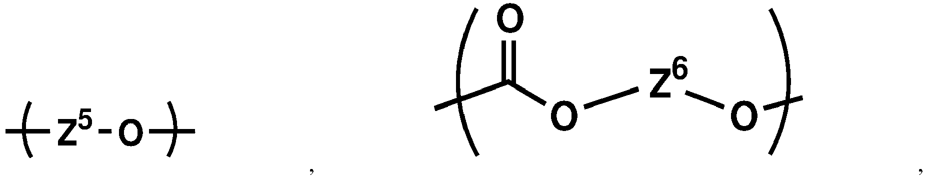 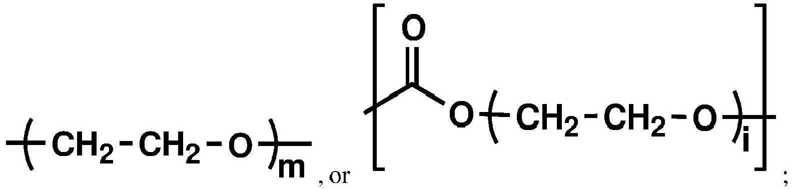 Z⁴, Z⁵, and Z⁶ may be independently C₁₋₁₀ alkylene group; m>1; and, i> 1. component (B) may be a lithium salt, and component (C) may be a solvent. According to embodiments of the disclosure, the weight ratio of the lithium salt to the solvent is 1:19 to 7:13

According to embodiments of the disclosure, the disclosure provides a quasi-solid electrolyte, wherein the quasi-solid electrolyte may be a product of the electrolyte composition of the disclosure via ring-opening polymerization.

According to other embodiments of the disclosure, the disclosure provides a lithium-ion battery, such as lithium-ion secondary battery. The lithium-ion battery may include a positive electrode, a negative electrode, a separator, and aforementioned quasi-solid electrolyte. In particular, the separator is disposed between the positive electrode and the negative electrode; and, the quasi-solid electrolyte may be disposed between the positive electrode and negative electrode.

### BRIEF DESCRIPTION OF THE DRAWINGS

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.

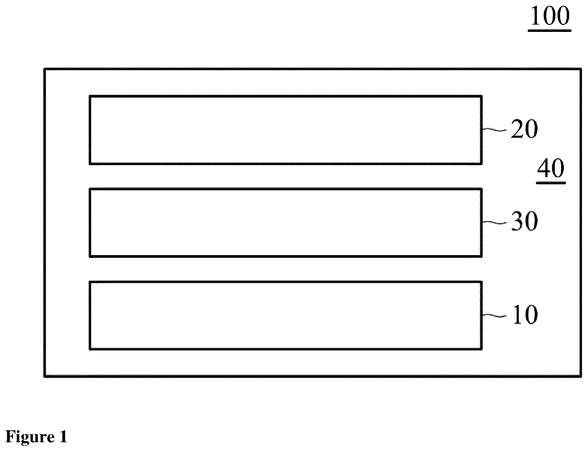

Figure 1 is a schematic view of the lithium-ion battery of the disclosure.

### DETAILED DESCRIPTION OF DISCLOSED EMBODIMENTS

The electrolyte composition, quasi-solid electrolyte and lithium-ion battery employing the same of the disclosure are described in detail in the following description. In the following detailed description, for purposes of explanation, numerous specific details and embodiments are set forth in order to provide a thorough understanding of the present disclosure. The specific elements and configurations described in the following detailed description are set forth in order to clearly describe the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. As used herein, the term "about" in quantitative terms refers to plus or minus an amount that is general and reasonable to persons skilled in the art.

The drawings described are only schematic and are non-limiting. In the drawings, the size, shape, or thickness of some of the elements may be exaggerated and not drawn on scale for illustrative purposes. The dimensions and the relative dimensions do not correspond to actual location to practice of the disclosure. The disclosure will be described with respect to particular embodiments and with reference to certain drawings but the disclosure is not limited thereto.

Moreover, the use of ordinal terms such as "first", "second", "third", etc., in the disclosure to modify an element does not by itself connote any priority, precedence, order of one claim element over another or the temporal order in which it is formed, but are used merely as labels to distinguish one claim element having a certain name from another element having the same name (but for use of the ordinal term) to distinguish the claim elements.

The disclosure provides an electrolyte composition. Since the electrolyte composition of the disclosure is liquid, it is easy to introduce the electrolyte composition into the chamber of the battery. In addition, the electrolyte composition of the disclosure alters to a quasi-solid electrolyte via ring-opening polymerization. Since the quasi-solid electrolyte of the disclosure includes a phosphorous-containing polymer, the lithium dendrite growth and the electrolyte volatilization can be inhibited, and it can also achieve the technical effect of flame retardant to enhance the safety of battery.

In addition, the quasi-solid electrolyte of the disclosure includes a polymer having a stereoscopic network structure (being apt to adsorb lithium salt and solvent), thereby reducing the required amount of polymer. As a result, the interfacial resistance of the electrolyte is reduced and the ionic conductivity of the electrolyte is increased. According to embodiments of the disclosure, the disclosure also provides a lithium-ion battery, wherein the lithium-ion battery may include the quasi-solid electrolyte of the disclosure. By means of the specific components of the quasi-solid electrolyte of the disclosure, the quasi-solid electrolyte of the disclosure is flame retardant, thereby increasing the safety of the battery in use.

According to embodiments of the disclosure, the disclosure provides an electrolyte composition. A quasi-solid electrolyte used in the battery may be prepared from the electrolyte composition of the disclosure via ring-opening polymerization (such as a heating process).

The electrolyte composition may include a component (A), component (B), and component (C). The component (A) may be a combination of a first polymer (A1) and a second polymer (A2), or the component (A) may be a third polymer (A3). The first polymer (A1) may have a repeating unit of Formula (I), the second polymer (A2) may have a repeating unit of Formula (II), and the third polymer (A3) may have a repeating unit of Formula (I) and a repeating unit of Formula (II), 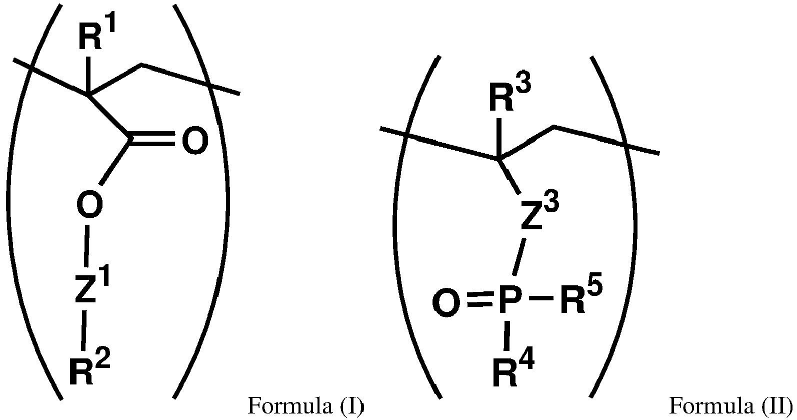 , wherein R¹ may be hydrogen or methyl group; R² may be oxiranyl group, methyloxiranyl group, glycidyl group, methylglycidyl group, oxetanyl group, or (3,4-epoxycyclohexyl)methyl group; Z¹ may be C₁₋₁₀ alkylene group, 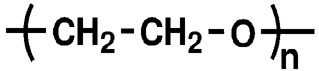 (Z¹ is bonded with R² via oxygen atom), or 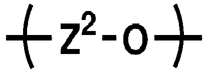 (Z¹ is bonded with R² via oxygen atom); n>1(such as: 5,000≥ n >1, 3,000≥ n >1, 2,000≥ n>1, 1,000≥ n >1, or 500≥ n >1); Z² may be C₁₋₁₀ alkylene group; R³ may be hydrogen or methyl group; R⁴ and R⁵ may be are independently C₁₋₁₀ alkyl group, C₁₋₁₀ alkoxy group, C₄₋₈ cycloalkyl group, C₄₋₈ cycloalkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group, or R⁴ may be substituted or non-substituted phenyl group and R⁵ may be substituted or non-substituted phenoxy group and R⁴ and R⁵ may be combined with the phosphorous atom which they are attached to, to form a 6-membered ring; Z³ may be C₁₋₁₀ alkylene group, 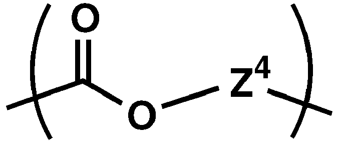 (Z³ is bonded with P via Z⁴), 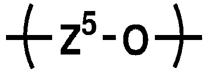 (Z³ is bonded with P via oxygen atom), 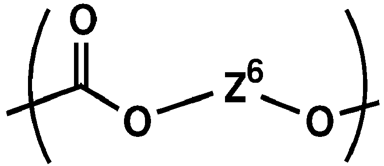 (Z³ is bonded with P via oxygen atom), 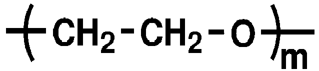 (Z³ is bonded with P via oxygen atom), or 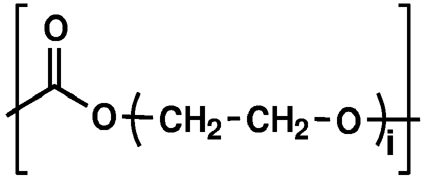 (Z³ is bonded with P via oxygen atom); Z⁴, Z⁵, and Z⁶ may be independently C₁₋₁₀ alkylene group; m>1(such as: 5,000≥ m >1, 3,000≥ m >1, 2,000≥ m >1, 1,000≥ m >1, or 500≥ m >1); and, i>1(such as: 5,000≥ i >1, 3,000≥ i >1, 2,000≥ i > 1, 1,000≥ i >1, or 500≥ i >1). The component (B) may be a lithium salt, and the component (C) may be a solvent.

According to embodiments of the disclosure, the first polymer (A1), the second polymer (A2), and the third polymer (A3) are different. According to embodiments of the disclosure, the first polymer (A1) may be a homopolymer, i.e. the first polymer (A1) does not include any other repeating units, except for the repeating unit of Formula (I). According to embodiments of the disclosure, the second polymer (A2) may be a homopolymer, i.e. the second polymer (A2) does not include any other repeating units, except for the repeating unit of Formula (II). According to embodiments of the disclosure, the third polymer (A3) is a copolymer, and the third polymer (A3) does not include any other repeating units except for a repeating unit of Formula (I) and a repeating unit of Formula (II). In addition, according to some embodiments of the disclosure, in the third polymer (A3), a repeating unit of Formula (I) and a repeating unit of Formula (II) are arranged in a block fashion. According to other embodiments of the disclosure, in the third polymer (A3), a repeating unit of Formula (I) and a repeating unit of Formula (II) are arranged in a random fashion.

According to embodiments of the disclosure, C₁₋₁₀ alkylene group may be linear or branched alkylene group. For example, C₁₋₁₀ alkylene group may be methanediyl group, ethanediyl group, propanediyl group, butanediyl group, pentanediyl group, hexanediyl group, heptanediyl group, octanediyl group, nonanediyl group, or decanediyl group, or an isomer thereof.

According to embodiments of the disclosure, C₁₋₁₀ alkyl group may be linear or branched alkyl group. for example, C₁₋₁₀ alkyl group may be methyl, ethyl, propyl, butyl, pentyl, hexyl, heptyl, octyl, nonyl, decyl or an isomer thereof.

According to embodiments of the disclosure, C₁₋₁₀ alkoxy group may be linear or branched alkoxy group. For example, C₁₋₁₀ alkoxy group may be methoxy, ethoxy, propoxy, butoxy, pentoxy, hexoxy, heptoxy group, octoxy group, nonoxy group, decoxy group or an isomer thereof.

According to embodiments of the disclosure, C₄₋₈ cycloalkyl group may be cyclobutyl group, cyclopentyl group, cyclohexyl group, cycloheptyl group, or cyclooctyl group.

According to embodiments of the disclosure, C₄₋₈ cycloalkoxy group may be cyclobutoxy group, cyclopentoxy group, cyclohexoxy group, cycloheptoxy group, or cyclooctoxy group.

According to embodiments of the disclosure, C₅₋₁₂ cycloalkyl alkyl group may be substituted C₁₋₄ alkyl group (such as methyl, ethyl, propyl or butyl). The substituted C₁₋₄ alkyl group means that at least one of the hydrogen bonded with the carbon of alkyl group may be optionally replaced with C₄₋₈ cycloalkyl group.

According to embodiments of the disclosure, C₅₋₁₂ cycloalkyl alkoxy group may be substituted C₁₋₄ alkoxy group (such as methoxy, ethoxy, propoxy, or butoxy). The substituted C₁₋₄ alkoxy group means that at least one of the hydrogen bonded with the carbon of alkoxy group may be optionally replaced with C₄₋₈ cycloalkyl group.

According to embodiments of the disclosure, the substituted phenyl group of the disclosure means that at least one of the hydrogen bonded with the carbon of phenyl group may be optionally replaced with C₁₋₄ alkyl group.

According to embodiments of the disclosure, the substituted phenoxy group of the disclosure means that at least one of the hydrogen bonded with the carbon of phenoxy group may be optionally replaced with C₁₋₄ alkyl group.

According to embodiments of the disclosure, the substituted benzyl group of the disclosure means that at least one of the hydrogen bonded with the carbon of benzyl group may be optionally replaced with C₁₋₄ alkyl group.

According to embodiments of the disclosure, the substituted benzyloxy group of the disclosure means that at least one of the hydrogen bonded with the carbon of benzyloxy group may be optionally replaced with C₁₋₄ alkyl group.

According to embodiments of the disclosure, the repeating unit of Formula (I) may be 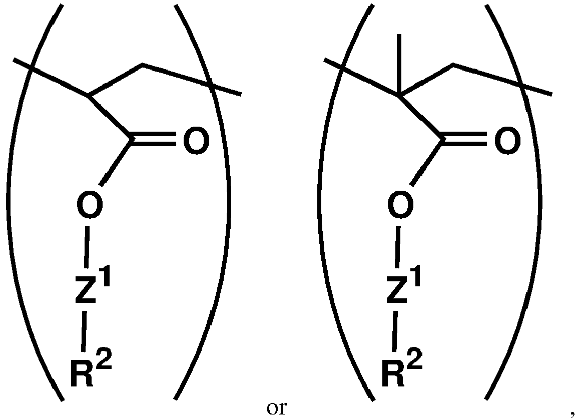 wherein Z¹ may be methanediyl group, ethanediyl group, propanediyl group (such as linear or branched propanediyl group), butanediyl group (such as linear or branched butanediyl group), pentanediyl group (such as linear or branched pentanediyl group), hexanediyl group (such as linear or branched hexanediyl group), heptanediyl group (such as linear or branched heptanediyl group), octanediyl group (such as linear or branched octanediyl group), nonanediyl group (such as linear or branched nonanediyl group), or decanediyl group (such as linear or branched decanediyl group); and, R² may be oxiranyl group, methyloxiranyl group, glycidyl group, methylglycidyl group, oxetanyl group, or (3,4-epoxycyclohexyl)methyl group.

According to embodiments of the disclosure, the repeating unit of Formula (I) may be 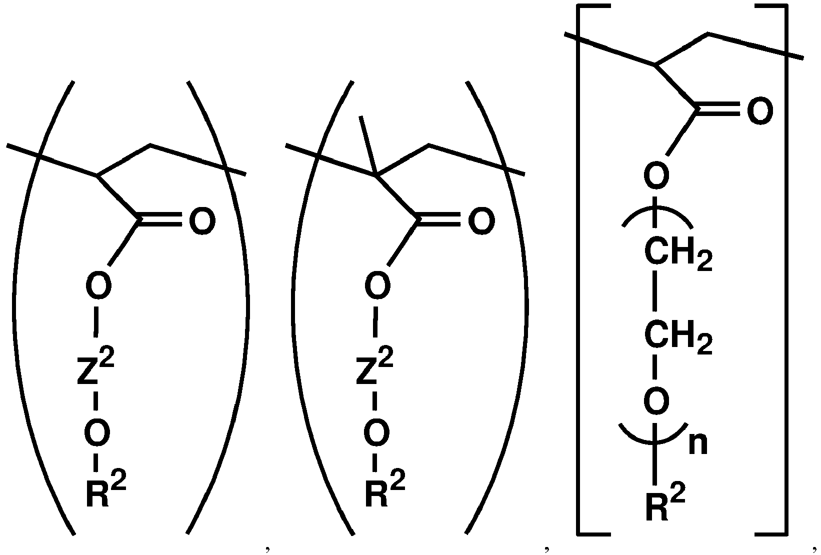 or 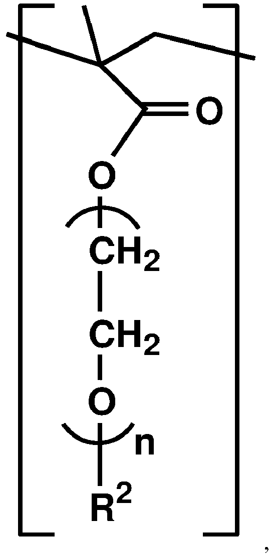 wherein R² may be oxiranyl group, methyloxiranyl group, glycidyl group, methylglycidyl group, oxetanyl group, or (3,4-epoxycyclohexyl)methyl group; n>1; and, Z² may be methanediyl group, ethanediyl group, propanediyl group (such as linear or branched propanediyl group), butanediyl group (such as linear or branched butanediyl group), pentanediyl group (such as linear or branched pentanediyl group), heptanediyl group (such as linear or branched heptanediyl group), octanediyl group (such as linear or branched octanediyl group), nonanediyl group (such as linear or branched nonanediyl group), or decanediyl group (such as linear or branched decanediyl group).

According to some embodiments of the disclosure, the repeating unit of Formula (I) may be 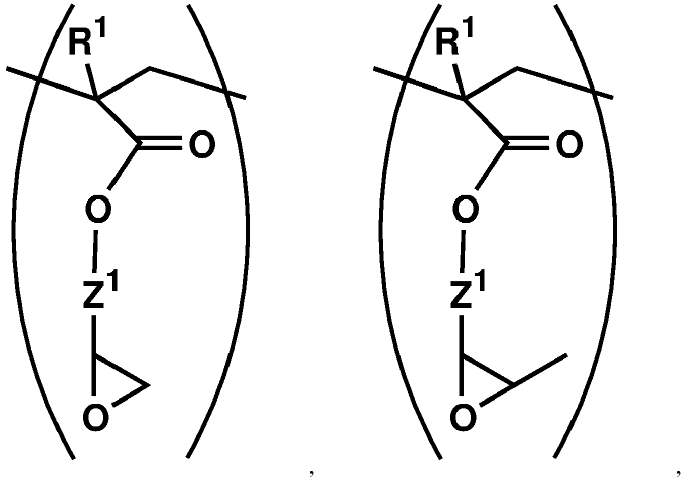 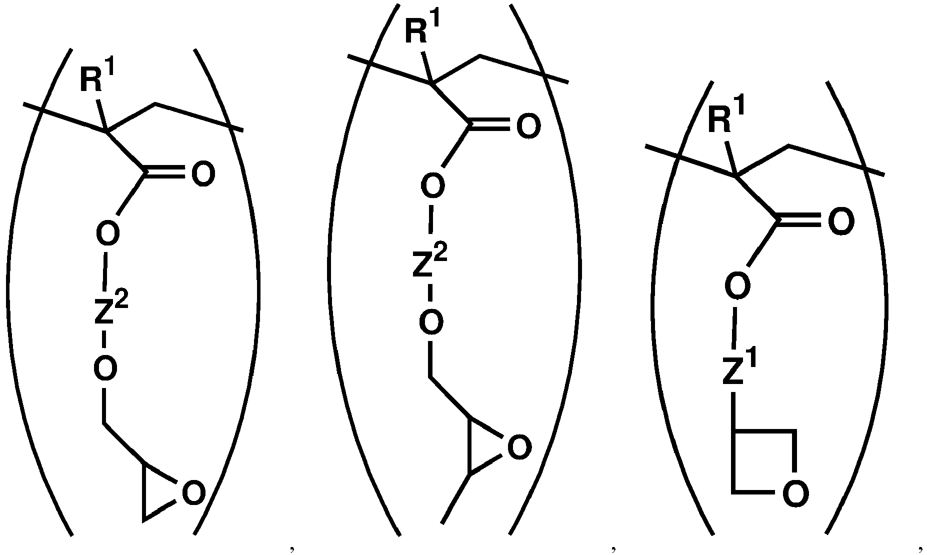 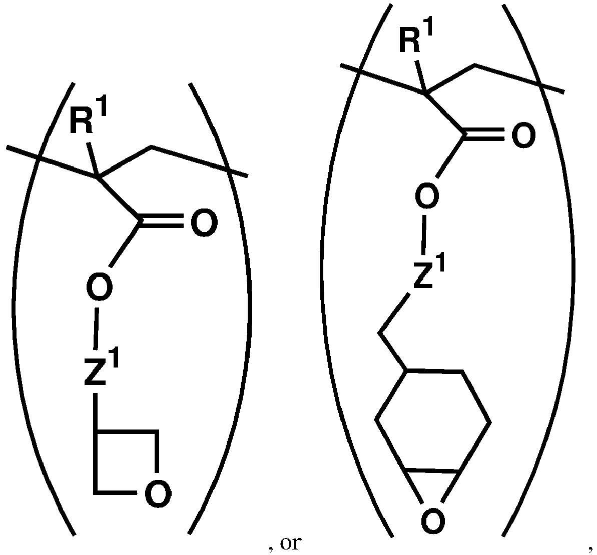 wherein Z¹ may be C₁₋₁₀ alkylene group, 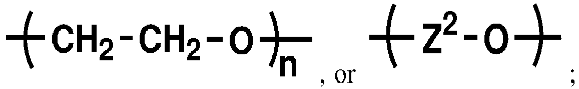 n>1(such as: 5,000≥ n >1, 3,000≥ n >1, 2,000≥ n >1, 1,000≥ n >1, or 500≥ n >1); and, Z² may be C₁₋₁₀ alkylene group.

According to embodiments of the disclosure, the repeating unit of Formula (II) may be 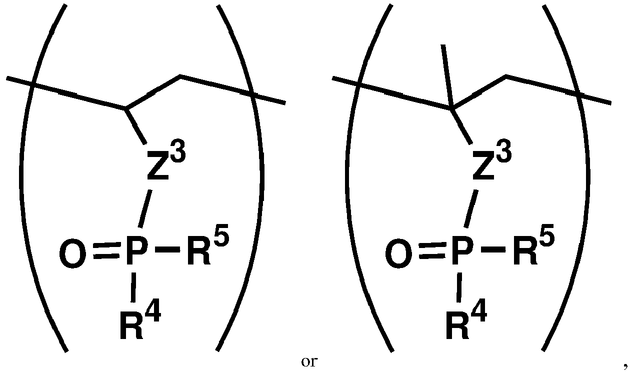 wherein Z³ may be methanediyl group, ethanediyl group, propanediyl group (such as linear or branched propanediyl group), butanediyl group (such as linear or branched butanediyl group), pentanediyl group (such as linear or branched pentanediyl group), heptanediyl group (such as linear or branched heptanediyl group), octanediyl group (such as linear or branched octanediyl group), nonanediyl group (such as linear or branched nonanediyl group), or decanediyl group (such as linear or branched decanediyl group); and R⁴ and R⁵ may be independently C₁₋₁₀ alkyl group, C₁₋₁₀ alkoxy group, C₄₋₈ cycloalkyl group, C₄₋₈ cycloalkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group. In addition, according to some embodiments of the disclosure, when R⁴ is a substituted or non-substituted phenyl group and R⁵ is a substituted or non-substituted phenoxy group, R⁴ and R⁵ may be combined with the phosphorus atom, which they are attached to, to form a 6-membered ring.

According to embodiments of the disclosure, R⁴ and R⁵ may be independently methyl group, ethyl group, propyl group (such as linear or branched propyl group), butyl group (such as linear or branched butyl group), pentyl group (such as linear or branched pentyl group), hexyl group (such as linear or branched hexyl group), heptyl group (such as linear or branched heptyl), octyl group (such as linear or branched octyl group), nonyl group (such as linear or branched nonyl group), decyl group (such as linear or branched decyl group), methoxy group, ethoxy group, propoxy group (such as linear or branched propoxy group), butoxy group (such as linear or branched butoxy group), pentoxy group (such as linear or branched pentoxy group), hexoxy group (such as linear or branched hexoxy group), heptoxy group (such as linear or branched heptoxy group), octoxy group (such as linear or branched octoxy group), nonoxy group (such as linear or branched nonoxy group), decoxy group (such as linear or branched decoxy group), cyclobutyl group, cyclopentyl group, cyclohexyl group, cycloheptyl group, cyclooctyl group, cyclobutoxy group, cyclopentoxy group, cyclohexoxy group, cycloheptoxy group, cyclooctoxy group, phenyl group, phenoxy group, benzyl group, or benzyloxy group.

According to embodiments of the disclosure, the repeating unit of Formula (II) may be 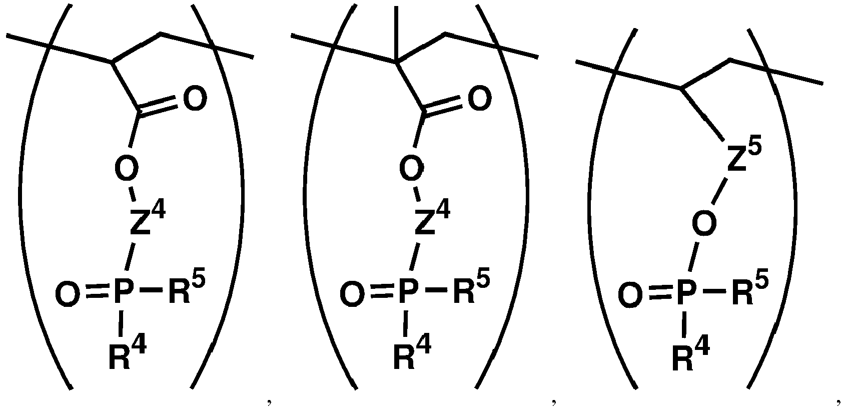 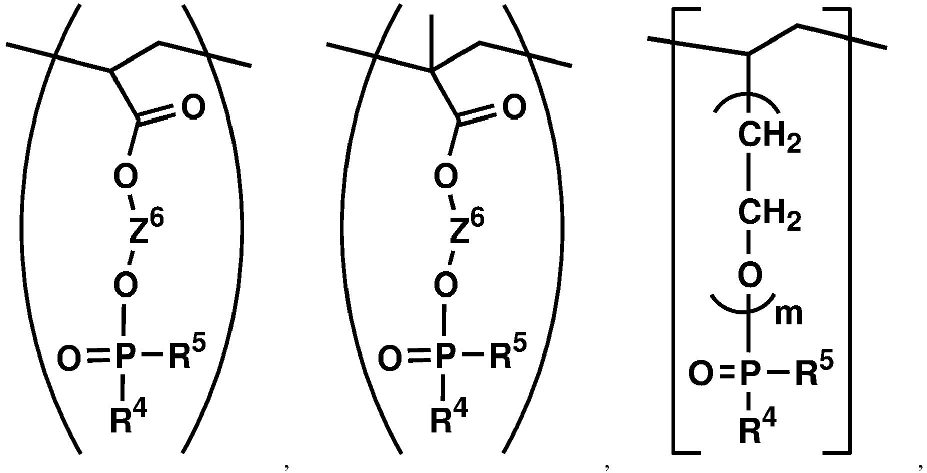 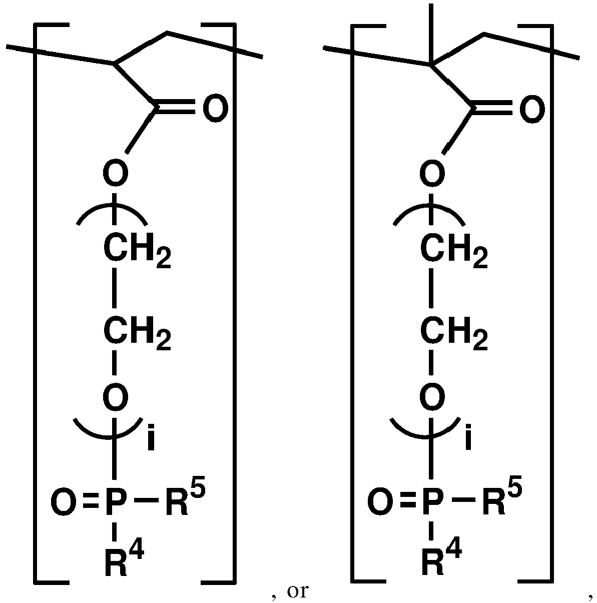 wherein Z⁴, Z⁵, and Z⁶ may be independently methanediyl group, ethanediyl group, propanediyl group (such as linear or branched propanediyl group), butanediyl group (such as linear or branched butanediyl group), pentanediyl group (such as linear or branched pentanediyl group), heptanediyl group (such as linear or branched heptanediyl group), octanediyl group (such as linear or branched octanediyl group), nonanediyl group (such as linear or branched nonanediyl group), or decanediyl group (such as linear or branched decanediyl group); m>1(such as: 5,000≥ m >1, 3,000≥ m >1, 2,000≥ m >1, 1,000≥ m >1, or 500≥ m >1); i>1(such as: 5,000≥ i >1, 3,000≥ i >1, 2,000≥ i >1, 1,000≥ i >1, or 500≥ i >1); and, R⁴ and R⁵ may be independently C₁₋₁₀ alkyl group, C₁₋₁₀ alkoxy group, C₄₋₈ cycloalkyl group, C₄₋₈ cyclo alkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group. In addition, according to some embodiments of the disclosure, when R⁴ is a substituted or non-substituted phenyl group and R⁵ is a substituted or non-substituted phenoxy group, R⁴ and R⁵ may be combined with the phosphorus atom, which they are attached to, to form a 6-membered ring.

According to embodiments of the disclosure, the repeating unit of Formula (II) may be 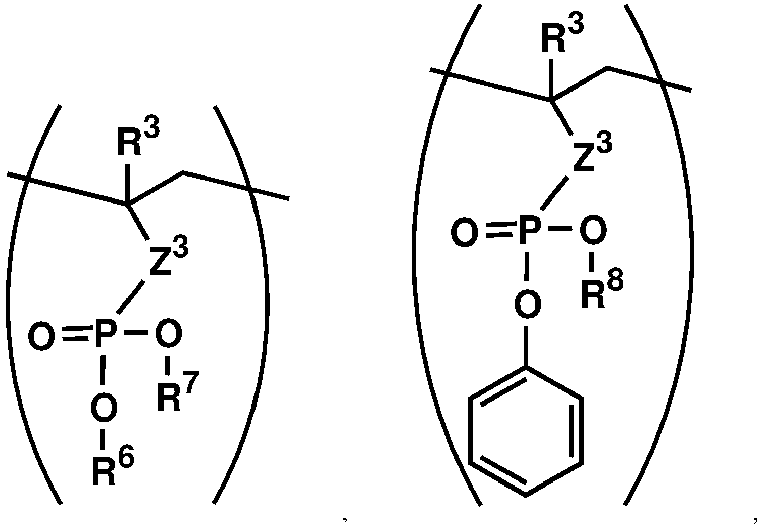 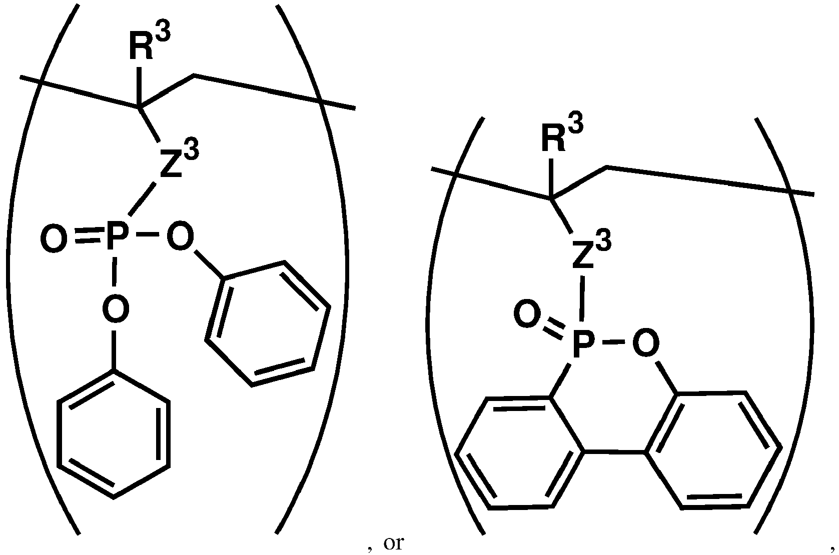 wherein R³ is hydrogen or methyl group; Z³ is C₁₋₁₀ alkylene group, 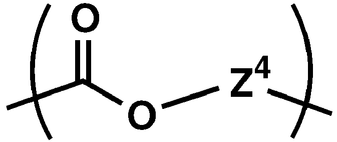 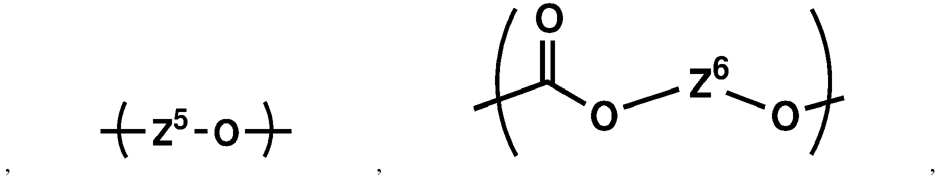 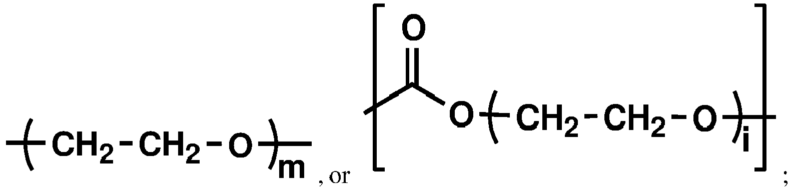 Z⁴, Z⁵, and Z⁶ are independently methanediyl group, ethanediyl group, propanediyl group (such as linear or branched propanediyl group), butanediyl group (such as linear or branched butanediyl group), pentanediyl group (such as linear or branched pentanediyl group), heptanediyl group (such as linear or branched heptanediyl group), octanediyl group (such as linear or branched octanediyl group), nonanediyl group (such as linear or branched nonanediyl group), or decanediyl group (such as linear or branched decanediyl group); m>1(such as: 5,000≥ m >1, 3,000≥ m >1, 2,000≥ m >1, 1,000≥ m >1, or 500≥ m >1); i>1(such as: 5,000≥ i >1, 3,000≥ i >1, 2,000≥ i >1, 1,000≥ i >1, or 500≥ i >1); and, R⁶, R⁷, and R⁸ are independently methyl group, ethyl group, propyl group(such as linear or branched propyl group), butyl group (such as linear or branched butyl group), pentyl group (such as linear or branched pentyl group), hexyl group (such as linear or branched hexyl group), heptyl group (such as linear or branched heptyl), octyl group (such as linear or branched octyl group), nonyl group (such as linear or branched nonyl group), decyl group (such as linear or branched decyl group).

According to embodiments of the disclosure, the component (A) may consist of the first polymer (A1) and the second polymer (A2), wherein the first polymer (A1) is distinct from the second polymer (A2). According to embodiments of the disclosure, the weight ratio of the first polymer (A1) to the second polymer (A2) is 1:4 to 4:1, such as 1:3, 1:2, 1:1, 2:1, or 3:1. When the amount of the first polymer (A1) is too low, the solvent adsorptivity of the quasi-solid electrolyte prepared from the electrolyte composition is reduced, resulting in that the electrolyte could not be solidified or gelled. When the amount of the first polymer (A1) is too high, the quasi-solid electrolyte prepared from the electrolyte composition is apt to form a dense network structure, thereby increasing the interfacial resistance and reducing the conductivity. When the amount of the second polymer (A2) is too low, the flame-retardant properties of the quasi-solid electrolyte prepared from the electrolyte composition would be adversely affected.

According to embodiments of the disclosure, the component (A) is the third polymer (A3). In the third polymer (A3), the number ratio of the repeating unit of Formula (I) to the repeating unit of Formula (II) is 1:4 to 4:1, such as 1:3, 1:2, 1:1, 2:1, or 3:1. When the amount of repeating unit of Formula (I) is too low, the solvent adsorptivity of the quasi-solid electrolyte prepared from the electrolyte composition is reduced, resulting in that the electrolyte could not be solidified or gelled. When the amount of repeating unit of Formula (I) is too high, the quasi-solid electrolyte prepared from the electrolyte composition is apt to form a dense network structure, thereby increasing the interfacial resistance and reducing the conductivity. When the amount of repeating unit of Formula (II) is too low, the flame-retardant properties of the quasi-solid electrolyte prepared from the electrolyte composition are adversely affected.

According to embodiments of the disclosure, the first polymer (A1) may be a product of a first composition via a reaction (such as polymerization). The first composition may include a first monomer and an initiator, wherein the first monomer may have a structure represented by Formula (III) 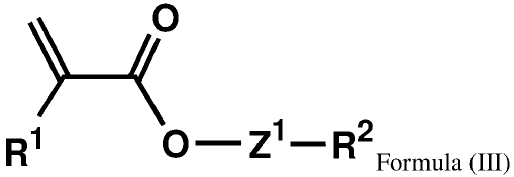 , wherein R¹ is hydrogen or methyl group; R² is oxiranyl group, methyloxiranyl group, glycidyl group, methylglycidyl group, oxetanyl group, or (3,4-epoxycyclohexyl)methyl group; Z¹ is C₁₋₁₀ alkylene group, 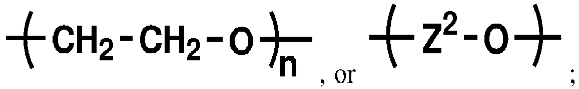 n>1(such as: 5,000≥ n >1, 3,000≥ n >1, 2,000≥ n>1, 1,000≥ n >1, or 500≥ n >1); and, Z² is C₁₋₁₀ alkylene group. According to embodiments of the disclosure, the first polymer (A1) is a homopolymer prepared from the first monomer.

According to embodiments of the disclosure, the first monomer may be glycidyl acrylate, glycidyl methacrylate (GMA), 2-hydroxyethyl acrylate glycidyl ether, 2-hydroxyethyl methacrylate glycidyl ether, 4-hydroxybutyl acrylate glycidyl ether, 4-hydroxybutyl methacrylate glycidyl ether, methylglycidyl acrylate, methylglycidyl methylacrylate, 3,4-epoxycyclohexylmethyl acrylate, or 3,4-epoxycyclohexylmethyl methacrylate.

According to embodiments of the disclosure, the weight average molecular weight (Mw) of the first polymer (A1) of the disclosure may be about 500 (g/mol) to 200,000 (g/mol), such as about 1,000 (g/mol), 2,000 (g/mol), 5,000 (g/mol), 10,000 (g/mol), 20,000 (g/mol), 50,000 (g/mol), or 150,000 (g/mol). The weight average molecular weight (Mw) of the first polymer (A1) can be determined by gel permeation chromatography (GPC) based on a polystyrene calibration curve.

According to embodiments of the disclosure, the first composition may consist of the first monomer and the initiator. According to embodiments of the disclosure, by means of the initiator, the acrylate group (or methacrylate group) of the first monomer react with each other to perform radical polymerization. For example, the initiator may be a photo-initiator, thermal initiator, or a combination thereof. According to embodiments of the disclosure, the amount of initiator may be about 0.01wt% to 20wt% (such as 0.1wt%, 0.5wt%, 1wt%, 2wt%, 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, or 19wt%), based on the total weight of the first monomer.

According to embodiments of the disclosure, the first composition can be reacted at a temperature of 20°C to 150°C for 60 minutes to 24 hours, and the first polymer (A1) is prepared from the first composition via polymerization.

According to embodiments of the disclosure, the second polymer (A2) may be a product of a second composition via reaction (such as polymerization). The second composition may include a second monomer and an initiator, wherein the second monomer may have a structure represented by Formula (IV) 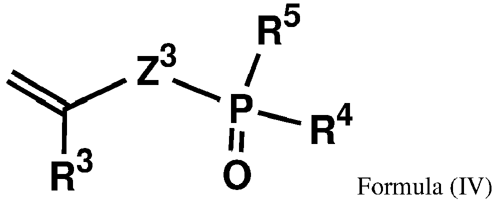 , wherein R³ may be hydrogen or methyl group; R⁴ and R⁵ may be independently C₁₋₁₀ alkyl group, C₁₋₁₀ alkoxy group, C₄₋₈ cycloalkyl group, C₄₋₈ cycloalkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group, or R⁴ may be substituted or non-substituted phenyl group and R⁵ may be substituted or non-substituted phenoxy group and R⁴ and R⁵ may be combined with the phosphorous atom which they are attached to, to form a 6-membered ring; Z³ is may be C₁₋₁₀ alkylene group, 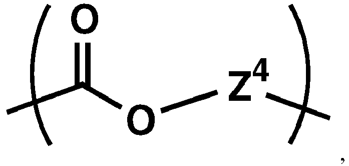 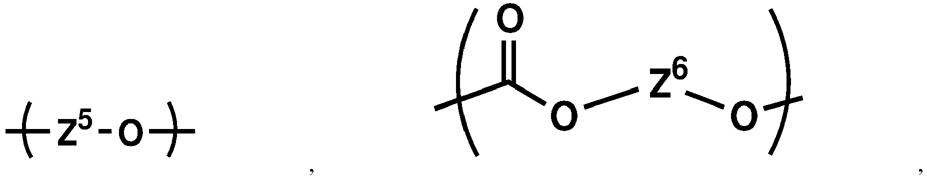 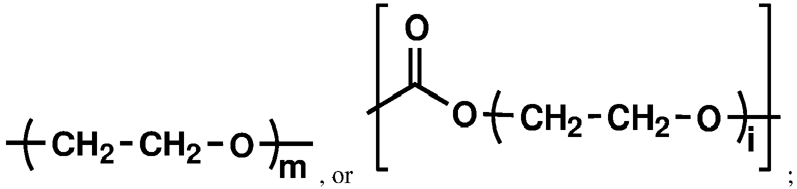 Z⁴, Z⁵ and Z⁶ may be independently C₁₋₁₀ alkylene group; m≥1(such as: 5,000≥ m ≥1, 3,000≥ m ≥1, 2,000≥ m ≥1, 1,000≥ m ≥1, or 500≥ m ≥1); and, i≥1(such as: 5,000≥ i ≥1, 3,000≥ i ≥1, 2,000≥ i ≥1, 1,000≥ i ≥1, or 500≥ i ≥1). According to embodiments of the disclosure, the second polymer (A2) is a homopolymer prepared from the second monomer.

According to embodiments of the disclosure, the weight average molecular weight (Mw) of the second polymer (A2) of the disclosure may be about 500 (g/mol) to 200,000 (g/mol), such as about 1,000 (g/mol), 2,000 (g/mol), 5,000 (g/mol), 10,000 (g/mol), 20,000 (g/mol), 50,000 (g/mol), or 150,000 (g/mol). The weight average molecular weight (Mw) of the second polymer (A2) can be determined by gel permeation chromatography (GPC) based on a polystyrene calibration curve.

According to embodiments of the disclosure, the second composition may consist of the second monomer and the initiator. According to embodiments of the disclosure, by means of the initiator, the acrylate group (or methacrylate group) or the alkenyl group of the second monomer react with each other to perform radical polymerization. For example, the initiator may be a photo-initiator, thermal initiator, or a combination thereof. According to embodiments of the disclosure, the amount of initiator may be about 0.01wt% to 10wt% (such as 0.1wt%, 0.5wt%, 1wt%, 2wt%, 3wt%, 4wt%, 5wt%, 6wt%, 7wt%, 8wt%, or 9wt%), based on the total weight of the second monomer.

According to embodiments of the disclosure, the second composition can be reacted at a temperature of 20°C to 150°C for 60 minutes to 24 hours, and the second polymer (A2) is prepared from the second composition via polymerization.

According to embodiments of the disclosure, the second monomer may be diethyl allyl phosphate, diethyl allyl phosphonate, diethyl 2-(acryloyloxy)ethyl phosphate, diethyl 2-(methacryloyloxy)ethyl phosphate, dibutyl 2-(acryloyloxy)ethyl phosphate, dibutyl 2-(methacryloyloxy)ethyl phosphate, diphenyl 2-(acryloyloxy)ethyl phosphate, diphenyl 2-(methacryloyloxy)ethyl phosphate, (6-Oxido-6H-dibenz[c,e][1,2]oxaphosphorin-6-yl) methyl acrylate, or (6-Oxido-6H-dibenz[c,e][1,2]oxaphosphorin-6-yl) methyl methacrylate.

According to embodiments of the disclosure, the third polymer (A3) may be a product of the third composition via reaction (such as copolymerization). The third composition may include the first monomer, second monomer and initiator. According to embodiments of the disclosure, the third polymer (A3) is a copolymer prepared from the first monomer and the second monomer.

According to embodiments of the disclosure, the weight average molecular weight (Mw) of the third polymer (A3) of the disclosure may be about 500 (g/mol) to 500,000 (g/mol), such as about 1,000 (g/mol), 2,000 (g/mol), 5,000 (g/mol), 10,000 (g/mol), 20,000 (g/mol), 50,000 (g/mol), 150,000 (g/mol), 200,000 (g/mol), 300,000 (g/mol), or 400,000 (g/mol). The weight average molecular weight (Mw) of the third polymer (A3) can be determined by gel permeation chromatography (GPC) based on a polystyrene calibration curve.

According to embodiments of the disclosure, the third composition may consist of the first monomer, the second monomer and initiator. According to embodiments of the disclosure, by means of the initiator, the acrylate group (or methacrylate group) of the first monomer and/or the acrylate group (or methacrylate group) or the alkenyl group of the second monomer react with each other to perform radical polymerization. For example, the initiator may be a photo-initiator, thermal initiator, or a combination thereof. According to embodiments of the disclosure, the amount of initiator may be about 0.01wt% to 20wt% (such as 0.1wt%, 0.5wt%, 1wt%, 2wt%, 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, or 19wt%), based on the total weight of the first monomer and second monomer.

According to embodiments of the disclosure, the third composition can be reacted at a temperature of 20°C to 150°C for 60 minutes to 24 hours, and the third polymer (A3) is prepared from the third composition via polymerization.

According to embodiments of the disclosure, the initiator may be radical polymerization initiator. According to embodiments of the disclosure, the initiator may be benzoin-based compound, acetophenone-based compound, thioxanthone-based compound, ketal compound, benzophenone-based compound, α-aminoacetophenone compound, acylphosphineoxide compound, biimidazole-based compound, triazine-based compound, or a combination thereof. The benzoin-based compound may be benzoin, benzoin methyl ether, or benzyl dimethyl ketal. The acetophenone-based compound may be p-dimethylamino-acetophenone, **α**,**α**'-dimethoxyazoxy-acetophenone, 2,2'-dimethyl-2-phenyl-acetophenone, p-methoxy-acetophenone, 2-methyl-1-(4-methylthiophenyl)-2-morpholino-1-propanone, or 2-benzyl-2-N,N-dimethylamino-1-(4-morpholinophenyl)-1-butanone. The benzophenone-based compound may be benzophenone, 4,4-bis(dimethylamino)benzophenone, 4,4-bis(diethylamino)benzophenone, 2,4,6-trimethylaminobenzophenone, methyl-o-benzoyl benzoate, 3,3-dimethyl-4-methoxybenzophenone, and 3,3,4,4-tetra(t-butylperoxycarbonyl)benzophenone. The thioxanthone-based compound may be thioxanthone, 2,4-diethyl-thioxanthanone, thioxanthone-4-sulfone. The biimidazole-based compound may be 2,2'-bis(o-chlorophenyl)-4,4',5,5'-tetraphenyl-biimidazole, 2,2'-bis(o-fluorophenyl)-4,4',5,5'-tetraphenyl-biimidazole, 2,2'-bis(o-methylphenyl)-4,4',5,5'-tetraphenyl-biimidazole, 2,2'-bis(o-methoxyphenyl)-4,4',5,5'-tetraphenyl-biimidazole, 2,2'-bis(o-ethylphenyl)-4,4',5,5'-tetraphenyl-biimidazole, 2,2'-bis(p-methoxyphenyl)-4,4',5,5'-tetraphenyl-biimidazole, 2,2'-bis(2,2',4,4'-tetramethoxyphenyl)-4,4',5,5'-tetraphenylbiimidazole, 2,2'-bis(2-chlorophenyl)-4,4',5,5'-tetraphenyl-biimidazole, or 2,2'-bis(2,4-dichlorophenyl)-4,4',5,5'-tetraphenyl-biimidazole. The acylphosphineoxide compound may be 2,4,6-trimethylbenzoyl diphenylphosphine oxide or bis(2,6-dimethoxybenzoyl)-2,4,4-trimethylpentylphosphine oxide. The triazine-based compound may be (3-{4-[2,4-bis(trichloromethyl)-s-triazine-6-yl]phenylthio}propionic acid, 1,1,1,3,3,3-hexafluoroisopropyl-3-{4-[2,4-bis(trichloromethyl)-s-triazine-6-yl]phenylthio }propionate, ethyl-2-{ 4-[2,4-bis(trichloromethyl)-s-triazine-6-yl]phenylthio} acetate, 2-epoxyethyl-2-{4-[2,4-bis(trichloromethyl)-s-triazine-6-yl]phenylthio}acetate, cyclohexyl-2-{4-[2,4-bis(trichloromethyl)-s-triazine-6-yl]phenylthio} acetate, benzyl-2-{4 -[2,4-bis(trichloromethyl)-s-triazine-6-yl]phenylthio } acetate, 3-{chloro-4-[2,4-bis(trichloromethyl)-s-triazine-6-yl]phenylthio}propionic acid, 3-{4-[2,4-bis(trichloromethyl)-s-triazine-6-yl]phenylthio}propionamide, 2,4-bis(trichloromethyl)-6-p-methoxystyryl-s-triazine, 2,4-bis(trichloromethyl)-6-(1-p-dimethylaminophenyl)-1,3,-butadienyl-s-triazine, or 2-trichloromethyl-4-amino-6-p-methoxystyryl-s-triazine.

According to embodiments of the disclosure, the initiator may be azo compound, cyanovaleric-acid-based compound, peroxide, or a combination thereof. The azo compound may be 2,2'-azobis(2,4-dimethyl valeronitrile), dimethyl 2,2'-azobis(2-methylpropionate), 2,2-azobisisobutyronitrile (AIBN), 2,2-azobis(2-methylisobutyronitrile), 1,1'-azobis(cyclohexane-1-carbonitrile), 2,2'-azobis[N-(2-propenyl)-2-methylpropionamide], 1-[(cyano-1-methylethyl)azo]formamide, 2,2'-azobis(N-butyl-2-methylpropionamide), or 2,2'-azobis(N-cyclohexyl-2-methylpropionamide). The peroxide may be benzoyl peroxide, 1,1-bis(tert-butylperoxy)cyclohexane, 2,5-bis(tert-butylperoxy)-2,5-dimethylcyclohexane, 2,5-bis(tert-butylperoxy)-2,5-dimethyl-3-cyclohexyne, bis(1-(tert-butylpeorxy)-1-methyethyl)benzene, tert-butyl hydroperoxide, tert-butyl peroxide, tert-butyl peroxybenzoate, cumene hydroperoxide, cyclohexanone peroxide, dicumyl peroxide, or lauroyl peroxide.

According to embodiments of the disclosure, since the electrolyte composition of the disclosure includes a polymer having a repeating unit of Formula (I), the electrolyte composition of the disclosure can form a polymer having a stereoscopic network structure after subjecting to a heating process to undergo a ring-opening polymerization.

Accordingly, in the electrolyte composition of the disclosure, the polymer can alter to the quasi-solid electrolyte, which is apt to adsorb lithium salt and solvent, via subsequent heating process without excessive addition. As a result, the increased interfacial resistance and reduced conductivity caused by electrolytes having high polymer additive amounts can be avoided. According to embodiments of the disclosure, since the electrolyte composition of the disclosure includes a polymer having a repeat unit represented by Formula (II), the quasi-solid electrolyte prepared from the electrolyte composition of the disclosure via ring-opening polymerization exhibits flame-retardant properties.

According to embodiments of the disclosure, the amount of component (A) may be 1wt% to 10wt% (such as 2wt%, 3wt%, 4wt%, 5wt%, 6wt%, 7wt%, 8wt%, or 9wt%), based on the total weight of component (A), component (B) and component (C). When the amount of component (A) is too high, the obtained quasi-solid electrolyte exhibits lower ionic conductivity and higher interfacial resistance. When the amount of component (A) is too low, the amount of uncured residual liquid in the quasi-solid electrolyte is increased, resulting in that the flame-retardant properties of the quasi-solid electrolyte cannot be enhanced.

According to embodiments of the disclosure, the electrolyte composition of the disclosure does not include any other polymers except component (A). According to embodiments of the disclosure, the electrolyte composition of the disclosure may consist of component (A), component (B) and component (C).

According to embodiments of the disclosure, the electrolyte composition of the disclosure does not include any reactive monomers, wherein the reactive monomer is a monomer that is able to react with other monomers to form a polymer via polymerization. According to embodiments of the disclosure, the electrolyte composition of the disclosure does not include a monomer used to form a polymer with a repeating unit of Formula (I); and, the electrolyte composition of the disclosure does not include a monomer used to form a polymer having a repeating unit of Formula (II).

According to embodiments of the disclosure, the weight ratio of the lithium salt (component (B)) to the solvent (component (C)) may be about 1:19 to 7:13, such as about 2:18, 3:17, 4:16, 5:15, or 6:14. According to embodiments of the disclosure, the lithium salt is lithium hexafluorophosphate (LiPF₆), lithium perchlorate (LiClO₄), bis(fluorosulfonyl)imide lithium (LiN(SO₂F)₂) (LiFSI), lithium difluoro(oxalato)borate (LiBF₂(C₂O₄)) (LiDFOB), lithium tetrafluoroborate (LiBF₄), lithium trifluoromethanesulfonate (LiSO₃CF₃), bis(trifluoromethane)sulfonimide lithium (LiN(SO₂CF₃)₂) (LiTFSI), lithium bis perfluoroethanesulfonimide (LiN(SO₂C₂F₅)₂), lithium hexafluoroarsenate (LiAsF₆), lithium hexafluoroantimonate (LiSbF₆), lithium tetrachloroaluminate (LiAlCl₄), lithium tetrachlorogallate (LiGaCl₄), lithium nitrate (LiNO₃), tris(trifluoromethanesulfonyl)methyllithium (LiC(SO₂CF₃)₃), lithium thiocyanate hydrate (LiSCN), LiO₃SC₂F₅, LiC₆F₅SO₃, LiO₂CCF₃, lithiumfluorosulfonate (LiSO₃F), lithium tetrakis(pentafluorophenyl)borate (LiB(C₆H₅)₄), lithium bis(oxalato)borate (LiB(C₂O₄)₂) (LiBOB), LiFePO₄, LiLaTi₂O₆, Li_{2.9}PO_{3.3}N_{0.46}, Li₃PO₄, Li_{1.3}Al_{0.3}Ti_{0.7}(PO₄)₃, Li_{3.6}Si_{0.6}P_{0.4}O₄, Li₅La₃Ta₂O₁₂, or a combination thereof.

According to embodiments of the disclosure, the solvent may be organic solvent, such as ester solvent, ketone solvent, carbonate solvent, ether solvent, alkane solvent, amide solvent, or a combination thereof. According to embodiments of the disclosure, the solvent may be 1,2-diethoxyethane, 1,2-dimethoxyethane, 1,2-dibutoxyethane, tetrahydrofuran, 2-methyl tetrahydrofuran, dimethylacetamide (DMAc), N-methyl-2-pyrrolidone (NMP), methyl acetate, ethyl acetate, methyl butyrate, ethyl butyrate, methyl propionate, ethyl proionate, propyl acetate (PA), γ-butyrolactone (GBL), ethylene carbonate (EC), propylene carbonate (PC), diethyl carbonate (DEC), ethylmethyl carbonate (EMC), dimethyl carbonate (DMC), vinylene carbonate, butylene carbonate, 1,3-propanesultone, dipropyl carbonate, or a combination thereof.

According to embodiments of the disclosure, the concentration of the lithium salt (component (B)) in the solvent (component (C)) may be about 0.5M to 6M, such as about 0.7M, 0.8M, 0.9M, 1M, 1.2M, 1.3M, 1.4M, 1.5M, 2M, 3M, 4M, or 5M.

According to embodiments of the disclosure, the method for preparing electrolyte composition includes mixing component (A), component (B), and component (C). According to embodiments of the disclosure, in order to ensure that the electrolyte composition of the disclosure can alter to a quasi-solid electrolyte via ring-opening polymerization, the electrolyte composition of the disclosure may additionally further include component (D), wherein the component (D) may be a ring-opening polymerization initiator, wherein the amount of component (D) may be 0.1wt% to 20wt%(such as 0.2wt%, 0.5wt%, 1wt%, 2wt%, 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, or 19wt%), based on the total weight of component (A), component (B), component (C) and component (D). According to embodiments of the disclosure, the electrolyte composition of the disclosure may consist component (A), component (B), component (C) and component (D).

According to embodiments of the disclosure, the ring-opening polymerization initiator may be an ionic compound, and the ring-opening polymerization initiator is different from the component (B) (i.e. lithium salt). According to embodiments of the disclosure, a cation of the ionic compound may be Na⁺, Li⁺, K⁺, Ag⁺, or NH₄⁺, an anion of the ionic compound may be H₃COO⁻, OH⁻, BF₄⁻, PF₆⁻, ClO₄⁻, N(SO₂F)₂⁻, N(SO₂CF₃)₂⁻, N(SO₂C₂F₅)₂⁻, BF₂(C₂O₄) ⁻, AsF₆⁻, or SbF₆⁻.

According to embodiments of the disclosure, when the lithium salt serving as the component (B) includes lithium trifluoromethanesulfonate (LiSO₃CF₃), lithium tetrachloroaluminate (LiAlCl₄), lithium tetrachlorogallate (LiGaCl₄), lithium nitrate (LiNO₃), tris(trifluoromethanesulfonyl)methyllithium (LiC(SO₂CF₃)₃), lithium thiocyanate hydrate (LiSCN), LiO₃SC₂F₅, LiC₆F₅SO₃, LiO₂CCF₃, lithiumfluorosulfonate (LiSO₃F), lithium tetrakis(pentafluorophenyl)borate (LiB(C₆H₅)₄), lithium bis(oxalato)borate (LiB(C₂O₄)₂) (LiBOB), LiFePO₄, LiLaTi₂O₆, Li_{2.9}PO_{3.3}N_{0.46}, Li₃PO₄, Li_{1.3}Al_{0.3}Ti_{0.7}(PO₄)₃, Li_{3.6}Si_{0.6}P_{0.4}O₄, or Li₅La₃Ta₂O₁₂, and the electrolyte composition of the disclosure may additionally further include the component (D).

According to embodiments of the disclosure, when the lithium salt serving as the component (B) includes lithium hexafluorophosphate (LiPF₆), lithium perchlorate (LiClO₄), bis(fluorosulfonyl)imide lithium (LiN(SO₂F)₂) (LiFSI), lithium difluoro(oxalato)borate (LiBF₂(C₂O₄)) (LiDFOB), lithium tetrafluoroborate (LiBF₄), lithium trifluoromethanesulfonate (LiSO₃CF₃), bis(trifluoromethane)sulfonimide lithium (LiN(SO₂CF₃)₂) (LiTFSI), lithium bis perfluoroethanesulfonimide (LiN(SO₂C₂F₅)₂), lithium hexafluoroarsenate (LiAsF₆), lithium hexafluoroantimonate (LiSbF₆), and the electrolyte composition of the disclosure may not include the component (D).

According to embodiments of the disclosure, the electrolyte composition of the disclosure may additionally further include the component (E), wherein the component (E) may be a filler, wherein the amount of component (E) may be 0.1wt% to 30wt%(such as 0.5wt%, 1wt%, 2wt%, 4wt%, 6wt%, 8wt%, 10wt%, 12wt%, 14wt%, 16wt%, 18wt%, 20wt%, 22wt%, 24wt%, 26wt%, 28wt% or 29wt%), based on the total weight of component (A), component (B), component (C) and component (E) (or the total weight of component (A), component (B), component (C), component (D) and component (E)). According to embodiments of the disclosure, the electrolyte composition of the disclosure may consist of component (A), component (B), component (C), component (D) and component (E).

According to embodiments of the disclosure, the mechanical strength and the ionic conductivity of the electrolyte can be increased and the operation safety of the battery can be improved due to the filler addition of the composition. According to embodiments of the disclosure, the filler may be titanium oxide, aluminum oxide, zinc oxide, zirconium oxide, silicon oxide, lithium lanthanum zirconate (LLZO), lithium lanthanum titanate (LLTO), lithium aluminum germanium phosphate (LAGP), lithium aluminum titanium phosphate (LATP), or a combination thereof.

According to embodiments of the disclosure, the disclosure also provides a quasi-solid electrolyte, which is a product of the electrolyte composition of the disclosure via ring-opening polymerization. The method for preparing the quasi-solid electrolyte of the disclosure may include subjecting the electrolyte composition of the disclosure to a heating process (with a temperature may be 20°C to 150°C and a process time of 60 minutes to 24 hours) so that the polymer having a repeating unit of Formula (I) (such as the first polymer (A1) or the third polymer (A3)) undergoes a ring-opening polymerization, obtaining the quasi-solid electrolyte of the disclosure.

According to embodiments of the disclosure, the disclosure also provides a lithium-ion battery including the aforementioned quasi-solid electrolyte. As shown in Figure 1, the lithium-ion battery 100 includes a negative electrode 10, a positive electrode 20, and a separator 30, wherein the negative electrode 10 is separated from the positive electrode 20 by the separator 30. According to embodiments of the disclosure, the battery 100 may include a quasi-solid electrolyte 40, and the electrolyte 40 is disposed between the negative electrode 10 and the positive electrode 20. Namely, the structure stacked by the negative electrode 10, separator 30 and the positive electrode 20 is immersed in the quasi-solid electrolyte 40. According to embodiments of the disclosure, the quasi-solid electrolyte is filled with the battery 100.

According to embodiments of the disclosure, the method for preparing the lithium-ion battery of the disclosure may include following steps. First, the lamination of the negative electrode 10, positive electrode 20, and separator 30 is disposed in a chamber. Next, the electrolyte composition of the disclosure is introduced into the chamber. Finally, the electrolyte composition is subjected to a heating process so that the electrolyte composition alters to the quasi-solid electrolyte 40.

According to embodiments of the disclosure, the negative electrode 10 includes a negative electrode active layer, wherein the negative electrode active layer includes a negative electrode active material. According to embodiments of the disclosure, the negative electrode active material may be lithium metal, lithium-containing alloy, transition metal oxide, metastable phase spherical carbon (MCMB), carbon nanotube (CNT), graphite graphene, coke, graphite (such as artificial graphite, natural graphite), carbon black, carbon fiber, mesophase carbon microbead, glassy carbon, lithium-containing compound, silicon-containing compound, tin, tin-containing compound, or a combination thereof. According to embodiments of the disclosure, the lithium-containing compound may include LiAl, LiMg, LiZn, Li₃Bi, Li₃Cd, Li₃Sb, Li₄Si, Li_{4.4}Pb, Li_{4.4}Sn, LiC₆, Li₃FeN₂, Li_{2.6}Co_{0.4}N, or Li_{2.6}Cu_{0.4}N. According to embodiments of the disclosure, the silicon-containing compound may include silicon oxide, carbon-modified silicon oxide, silicon carbide, pure-silicon material, or a combination thereof. According to embodiments of the disclosure, the tin-containing compound can include tin antimony alloy (SnSb) or tin oxide (SnO). According to embodiments of the disclosure, transition metal oxide can include Li₄Ti₅O₁₂ or TiNb₂O₇. According to embodiments of the disclosure, the lithium alloy can be aluminum-lithium-containing alloy, lithium-magnesium-containing alloy, lithium-zinc-containing alloy, lithium-lead-containing alloy, or lithium-tin-containing alloy.

According to embodiments of the disclosure, the negative electrode active layer may additionally further include a conductive additive, wherein the conductive additive may be carbon black, conductive graphite, carbon nanotube, carbon fiber, or graphite graphene. According to embodiments of the disclosure, the negative electrode active layer may additionally further include a binder, wherein the binder may include polyethylene (PE), polyvinyl alcohol (PVA), polytetrafluoroethylene (PTFE), sodium carboxymethyl cellulose, polyvinylidene fluoride (PVDF), styrene-butadiene copolymer, fluorinated rubber, polyurethane, polyvinyl pyrrolidone, polypropylene (PP), poly(ethyl acrylate), polyvinylchloride (PVC), polyacrylonitrile (PAN), polybutadiene, polyacrylic acid (PAA), or a combination thereof.

According to embodiments of the disclosure, the negative electrode 10 may additionally further include a negative electrode current-collecting layer, and the negative electrode active layer is disposed on the negative electrode current-collecting layer. According to embodiments of the disclosure, the negative electrode active layer may disposed between the separator and the negative electrode current-collecting layer. According to embodiments of the disclosure, the negative electrode current-collecting layer may be a conductive carbon substrate, metal foil, or metal material with a porous structure, such as carbon cloth, carbon felt, carbon paper, copper foil, nickel foil, aluminum foil, nickel mesh, copper mesh, molybdenum mesh, nickel foam, copper foam, or molybdenum foam. According to embodiments of the disclosure, the metal material with a porous structure may have a porosity about 10% to 99.9% (such as about 60% or 70%).

According to embodiments of the disclosure, the negative electrode active layer may be prepared from a negative electrode slurry. According to embodiments of the disclosure, the negative electrode slurry may include a negative electrode active material, conductive additive, binder and solvent, wherein the negative electrode active material, conductive additive and binder are dispersed in the solvent, wherein the solid content of the negative electrode slurry can be from 40wt% to 80wt%. According to embodiments of the disclosure, the method for preparing the negative electrode may include the following steps. First, the negative electrode slurry is coated on a surface of the negative electrode current-collecting layer via a coating process to form a coating. Next, the coating is subjected to a drying process (at a temperature from 50°C to 180°C), obtaining a negative electrode with a negative electrode active layer.

According to embodiments of the disclosure, the solvent may be 1-methyl-2-pyrrolidinone (NMP), N, N-dimethylformamide (DMF), N, N-dimethylacetamide (DMAc), pyrrolidone, N-dodecylpyrrolidone, γ-butyrolactone, water, or a combination thereof. According to embodiments of the disclosure, the coating process can be screen printing, spin coating, bar coating, blade coating, roller coating, solvent casting, or dip coating.

According to embodiments of the disclosure, in the negative electrode active layer, the negative electrode active material can have a weight percentage of about 80wt% to 99.8wt%, the conductive additive can have a weight percentage of about 0.1wt% to 10wt%, and the binder can have a weight percentage of about 0.1wt% to 10wt%, based on the total weight of the negative electrode active material, the conductive additive, and the binder.

According to embodiments of the disclosure, the positive electrode 10 includes a positive electrode active layer, wherein the positive electrode active layer includes a positive electrode active material. According to embodiments of the disclosure, the positive electrode active material may be sulfur, organic sulfide, sulfur-carbon composite, metal-containing lithium oxide, metal-containing lithium sulfide, metal-containing lithium selenide, metal-containing lithium telluride, metal-containing lithium phosphide, metal-containing lithium silicide, metal-containing lithium boride, or a combination thereof, wherein the metal is selected from a group consisting of aluminum, vanadium, titanium, chromium, copper, molybdenum, niobium, iron, nickel, cobalt, and manganese. According to embodiments of the disclosure, the positive electrode active material may be lithium-cobalt oxide, lithium-nickel oxide, lithium-manganese oxide, lithium-cobalt manganese oxide, lithium-nickel-cobalt oxide, lithium-manganese-nickel oxide, lithium-nickel-manganese-cobalt oxide, lithium-cobalt phosphate, lithium-chromium-manganese oxide, lithium-nickel-vanadium oxide, lithium-manganese-nickel oxide, lithium-cobalt-vanadium oxide, lithium-nickel-cobalt-aluminum oxide, lithium-iron phosphate, lithium-manganese-iron phosphate, or a combination thereof.

According to embodiments of the disclosure, the positive electrode active layer may additionally further include a conductive additive, wherein the conductive additive may be carbon black, conductive graphite, carbon nanotube, carbon fiber, or graphene. According to embodiments of the disclosure, the positive electrode active layer may additionally further include a binder, wherein the binder may include polyvinyl alcohol (PVA), polytetrafluoroethylene (PTFE), sodium carboxymethyl cellulose, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof.

According to embodiments of the disclosure, the positive electrode may additionally further include a positive electrode current-collecting layer, and the positive electrode active layer is disposed on the positive electrode current-collecting layer. According to embodiments of the disclosure, the positive electrode active layer may disposed between the separator and the positive electrode current-collecting layer. According to embodiments of the disclosure, the positive electrode current-collecting layer may be conductive carbon substrate, metal foil, or metal material with a porous structure, such as carbon cloth, carbon felt, carbon paper, copper foil, nickel foil, aluminum foil, nickel mesh, copper mesh, molybdenum mesh, nickel foam, copper foam, or molybdenum foam. According to embodiments of the disclosure, the metal material with a porous structure can have a porosity P from about 10% to 99.9% (such as about 60% or 70%).

According to embodiments of the disclosure, the positive electrode active layer may be prepared from a positive electrode slurry. According to embodiments of the disclosure, the positive electrode slurry can include a positive electrode active material, conductive additive, binder, and solvent, wherein the positive electrode active material, conductive additive, and binder are dispersed in the solvent, wherein the solid content of the positive electrode slurry can be from 40wt% to 80wt%. According to embodiments of the disclosure, the method for preparing the positive electrode may include the following steps. First, the positive electrode slurry is coated on a surface of the positive electrode current-collecting layer via a coating process to form a coating. Next, the coating is subjected to a drying process (at a temperature from 90°C to 180°C), obtaining a positive electrode with a positive electrode active layer. According to embodiments of the disclosure, the solvent may be 1-methyl-2-pyrrolidinone (NMP), N,N-dimethylformamide (DMF), N, N-dimethylacetamide (DMAc), pyrrolidone, N-dodecylpyrrolidone, γ- butyrolactone, water, or a combination thereof. According to embodiments of the disclosure, the coating process can be screen printing, spin coating, bar coating, blade coating, roller coating, solvent casting, or dip coating.

According to embodiments of the disclosure, in the positive electrode active layer, the positive electrode active material can have a weight percentage of about 80wt% to 99.8wt%, the conductive additive can have a weight percentage of about 0.1wt% to 10wt%, and the binder can have a weight percentage of about 0.1wt% to 10wt%, based on the total weight of the positive electrode active material, the conductive additive, and the binder.

According to embodiments of the disclosure, the separator 30 may be insulating material, such as polyethylene (PE), polypropylene (PP), polytetrafluoroethylene (PTFE) film, polyamide film, polyvinyl chloride (PVC) film, poly(vinylidene fluoride) film, polyaniline film, polyimide film, polyethylene terephthalate, polystyrene (PS), cellulose, or a combination thereof. For example, the separator can be PE/PP/PE multilayer composite structure. According to embodiments of the disclosure, the thickness of the separator is not limited and can be optionally modified by a person of ordinary skill in the field. According to embodiments of the disclosure, the thickness of the separator 30 can be of about 1µm to 1,000µm (such as about 10µm, 50µm, 100µm, 200µm, 300µm, 400µm, 500µm, 600µm, 700µm, 800µm, or 900µm). When the thickness of the separator is too high, the energy density of the battery is reduced. When the thickness of the separator is too low, the shortcircuit occurrence between the positive electrode and negative electrode would be increased, the self-discharge rate of the battery is increased, and the cycling stability of the battery is affected due to the insufficient mechanical strength of the separator.

Below, exemplary embodiments will be described in detail with reference to the accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLE

### Preparation of Polymer

### Preparation Example 1

100 parts by weight of glycidyl methacrylate (GMA) was dissolved in 100 parts by weight of methyl ethyl ketone (MEK), and then 3 parts by weight of 2,2'-azobisisobutyronitrile (AIBN) serving as initiator was added, obtaining a mixture. Next, the mixture was subjected to a heating process (with a process temperature of 70°C) so that glycidyl methacrylate (GMA) underwent a radical polymerization. After reacting for 24 hours, the result was cooled down to room temperature, and the result was mixed with diethyl ether, wherein the volume ratio of the result to diethyl ether was 1:20. After completely mixing and standing, the precipitate solid was collected and dried, obtaining Polymer (1).

The average molecular weight of Polymer (1) was measured by gel permeation chromotography (GPC) (RI Model 2414) and the average molecular weight of Polymer (1) was about 24,000 (g/mol). Next, the results of nuclear magnetic resonance spectrometry of Polymer (1) are shown below: ¹H NMR (CDCl₃, 500 MHz) 4.23-4.51 (m), 3.72-3.92 (m), 3.12-3.35 (s), 2.79-2.93 (s), 2.58-2.74 (s), 0.78-2.18 (m).

### Preparation Example 2

100 parts by weight of diethyl 2-(methacryloyloxy) ethyl phosphate (with a structure of 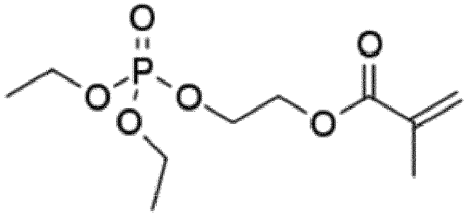 ) was dissolved in 100 parts by weight of methyl ethyl ketone (MEK), and then 3 parts by weight of 2,2'-azobisisobutyronitrile (AIBN) serving as initiator was added, obtaining a mixture. Next, the mixture was subjected to a heating process (with a process temperature of 70°C) so that diethyl 2-(methacryloyloxy) ethyl phosphate underwent radical polymerization. After reacting for 24 hours, the result was cooled down to room temperature, and the result was mixed with diethyl ether, wherein the volume ratio of the result to diethyl ether was 1:20. After completely mixing and standing, the precipitate solid was collected and dried, obtaining Polymer (2).

The average molecular weight of Polymer (2) was measured by gel permeation chromotography (GPC) and the average molecular weight of Polymer (2) was about 6,000 (g/mol). Next, the results of nuclear magnetic resonance spectrometry of Polymer (2) are shown below: ¹H NMR (CDCl₃, 500 MHz) 4.09-4.27 (m), 0.78-2.18 (m).

### Preparation Example 3

100 parts by weight of diphenyl 2-(methacryloyloxy) ethyl phosphate (with a structure of 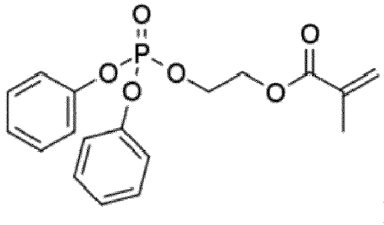 ) was dissolved in 100 parts by weight of methyl ethyl ketone (MEK), and then 3 parts by weight of 2,2'-azobisisobutyronitrile (AIBN) serving as initiator was added, obtaining a mixture. Next, the mixture was subjected to a heating process (with a process temperature of 70°C) so that diphenyl 2-(methacryloyloxy) ethyl phosphate underwent radical polymerization. After reacting for 24 hours, the result was cooled down to room temperature, and the result was mixed with diethyl ether, wherein the volume ratio of the result to diethyl ether was 1:20. After completely mixing and standing, the precipitate solid was collected and dried, obtaining Polymer (3).

### Preparation Example 4

100 parts by weight of 6-Oxido-6H-dibenz[c,e][1,2]oxaphosphorin-6-yl) methyl methacrylate (with a structure of 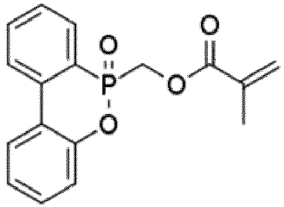 ) was dissolved in 100 parts by weight of methyl ethyl ketone (MEK), and then 3 parts by weight of 2,2'-azobisisobutyronitrile (AIBN) serving as initiator was added, obtaining a mixture. Next, the mixture was subjected to a heating process (with a process temperature of 70°C) so that 6-Oxido-6H-dibenz[c,e][1,2]oxaphosphorin-6-yl) methyl methacrylate underwent a radical polymerization. After reacting for 24 hours, the result was cooled down to room temperature, and the result was mixed with diethyl ether, wherein the volume ratio of the result to diethyl ether was 1:20. After completely mixing and standing, the precipitate solid was collected and dried, obtaining Polymer (4).

### Preparation Example 5

50 parts by weight of glycidyl methacrylate (GMA) and 50 parts by weight of diethyl 2-(methacryloyloxy) ethyl phosphate (with a structure of 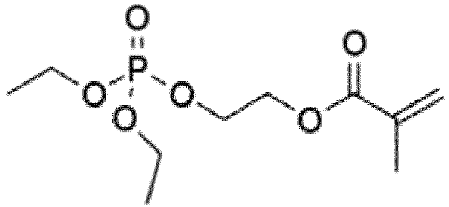 ) were dissolved in 100 parts by weight of methyl ethyl ketone (MEK), and then 3 parts by weight of 2,2'-azobisisobutyronitrile (AIBN) serving as initiator was added, obtaining a mixture. Next, the mixture was subjected to a heating process (with a process temperature of 70°C) so that glycidyl methacrylate (GMA) and diethyl 2-(methacryloyloxy) ethyl phosphate underwent a radical polymerization. After reacting for 24 hours, the result was cooled down to room temperature, and the result was mixed with diethyl ether, wherein the volume ratio of the result to diethyl ether was 1:20. After completely mixing and standing, the precipitate solid was collected and dried, obtaining Polymer (5).

The average molecular weight of Polymer (5) was measured by gel permeation chromotography (GPC) and the average molecular weight of Polymer (5) was about 22,000 (g/mol). Next, the results of nuclear magnetic resonance spectrometry of Polymer (5) are shown below: ¹H NMR (CDCl₃, 500 MHz) 4.23-4.51 (m), 4.09-4.27 (m), 3.72-3.92 (m), 3.12-3.35 (s), 2.79-2.93 (s), 2.58-2.74 (s), 0.78-2.18 (m).

### Preparation of electrolyte composition

### Example 1

93 parts by weight of liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2), 2 parts by weight of ring-opening polymerization initiator (LiBF₂(C₂O₄)), 2 parts by weight of Polymer (1), and 3 parts by weight of Polymer (2) were mixed, obtaining Electrolyte composition (1).

### Example 2

93 parts by weight of liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2), 2 parts by weight of ring-opening polymerization initiator (LiBF₂(C₂O₄)), 2 parts by weight of Polymer (1), and 3 parts by weight of Polymer (3) were mixed, obtaining Electrolyte composition (2).

### Example 3

93 parts by weight of liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2), 2 parts by weight of ring-opening polymerization initiator (LiBF₂(C₂O₄)), 2 parts by weight of Polymer (1), and 3 parts by weight of Polymer (4) were mixed, obtaining Electrolyte composition (3).

### Example 4

95 parts by weight of liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2), 2 parts by weight of ring-opening polymerization initiator (LiBF₂(C₂O₄)), and 3 parts by weight of Polymer (5) were mixed, obtaining Electrolyte composition (4).

### Comparative Example 1

96 parts by weight of liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2), 2 parts by weight of ring-opening polymerization initiator (LiBF₂(C₂O₄)) and 2 parts by weight of Polymer (1) were mixed, obtaining Electrolyte composition (5).

### Preparation of quasi-solid electrolyte

Electrolyte composition (1), (2) and (5) were individually subjected to a heating process (with a process temperature of 55°C and a process time of 14 hours), so that Polymer (1) in the composition performed ring-opening polymerization, obtaining Quasi-solid electrolyte (1)-(3).

### Self-extinguishing test

1g of Quasi-solid electrolytes (1)-(3) were respectively disposed on containers with 47mm in diameter. Next, Quasi-solid electrolyte (1)-(3) were ignited to burn itself, and the time from the ignition of the quasi-solid electrolyte to the end of combustion (i.e. self-extinguish time (SET), which is a numerical value represented by sec/g) was recorded, and the results are shown in Table 1. According to the definition of the reference (J. of Electrochem.Soc. 2002, 149, A6225), SET>20 represents flammable materials, 6<SET<20 represents flame-retardant materials, and SET<6 represents flame-resistant materials.

**Table 1**

| | Electrolyte Composition | self-extinguish time (sec/g) | property |
|---|---|---|---|
| Quasi-solid electrolyte (1) | 93 parts by weight of liquid electrolyte /2 parts by weight of ring-opening polymerization initiator /2 parts by weight of polymer (1)/ 3 parts by weight of polymer (2) | 0 | flame-resistant |
| Quasi-solid electrolyte (2) | 93 parts by weight of liquid electrolyte /2 parts by weight of ring-opening polymerization | 0 | flame-resistant |
| | initiator /2 parts by weight of polymer (1)/ 3 parts by weight of polymer (3) | | |
| Quasi-solid electrolyte (3) | 96 parts by weight of liquid electrolyte /2 parts by weight of ring-opening polymerization initiator /2 parts by weight of polymer (1) | >20 | flammable |

As shown in Table 1, when the electrolyte composition merely includes the first polymer of the disclosure (i.e. Electrolyte composition (5)), the quasi-solid electrolyte prepared from the electrolyte composition had a self-extinguish time as same as that of the liquid electrolyte as disclosed in Examples.

When the electrolyte composition simultaneously includes the first polymer of the disclosure and the second polymer of the disclosure (i.e. Electrolyte compositions (1) and (2)), the quasi-solid electrolyte prepared from the electrolyte composition obviously exhibits flame-resistant properties.

### Preparation of lithium-ion battery

### Example 5

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. Next, a graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, Electrolyte composition (1) was injected into the dried pouch cell at an argon-filled glovebox. After packaging and heating to 55°C for 14 hours, Lithium-ion battery (1) was obtained.

### Example 6

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. A graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, Electrolyte composition (2) was injected into the dried pouch cell at an argon-filled glovebox. After packaging and heating to 55°C for 14 hours, Lithium-ion battery (2) was obtained.

### Example 7

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. A graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, Electrolyte composition (4) was injected into the dried pouch cell at an argon-filled glovebox. After packaging and heating to 55°C for 14 hours, Lithium-ion battery (3) was obtained.

### Comparative Example 2

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. A graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, a liquid electrolyte (including LiPF₆, ethylene carbonate (EC), ethylmethyl carbonate (EMC), and diethyl carbonate (DEC), wherein the concentration of LiPF₆ was 1M, and the volume ratio of ethylene carbonate (EC), ethylmethyl carbonate (EMC) and diethyl carbonate (DEC) was 3:5:2) was injected into the dried pouch cell at an argon-filled glovebox. After packaging and heating to 55°C for 14 hours, Lithium-ion battery (4) was obtained.

### Comparative Example 3

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. A graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, Electrolyte composition (5) was injected into the dried pouch cell at an argon-filled glovebox. After packaging and heating to 55°C for 14 hours, Lithium-ion battery (5) was obtained.

### Comparative Example 4

The standard lithium-ion battery positive electrode slurry (including 97.3wt% of NMC811 (LiNiᵢMnⱼCoₖO₂, wherein i=0.83~0.85; j=0.4~0.5; and k=0.11~0.12) (commercially available from Ningbo Ronbay New Energy Technology Co., Ltd. with a trade number of NMC811-S85E), 1wt% of Super-P (conductive carbon, commercially available from Timcal), 1.4wt% of PVDF-5130, and 0.3wt% of carbon nanotube (with a trade number of TUBALL^{™} BATT, commercially available from OCSiAl), wherein NMC811-S85E, Super-P, PVDF-5130, and carbon nanotube were uniformly dispersed in n-methyl-2-pyrrolidone (NMP)) was coated on an aluminum foil (serving as the positive electrode current-collecting layer) (commercially available from An Chuan Enterprise Co., Ltd., with a thickness of 12µm). After drying, a positive electrode was obtained. A graphite electrode (including an active material disposed on a current-collecting substrate, wherein the current-collecting substrate was carbon fiber paper and the active material was natural graphite) was provided to serve as the negative electrode. Next, a separator (available under the trade designation of Celgard 2320, Asahi Kasei) was provided. Next, the negative electrode, the separator, and the positive electrode were placed in sequence to obtain a lamination and the lamination was sealed within an aluminum plastic pouch, and the result was disposed in the baker to dry at 80°C for 2 hours. Next, Electrolyte composition (2) was injected into the dried pouch cell at an argon-filled glovebox. After packaging (without a heating process), Lithium-ion battery (6) was obtained.

Next, the discharge capacity and discharge capacity retention of Lithium-ion batteries (1), (2), (4) and (5) disclosed in Examples 5-6 and Comparative Examples 2-3 were measured at discharge rate of 0.5C and 2C, and the results are shown in Table 2. In addition, the capacity retention (%) of Lithium-ion batteries (1), (2), (4) and (5) disclosed in Examples 5-6 and Comparative Examples 2-3 were measured, and the results are shown in Table 2. The capacity retention was measured by determining the discharge specific capacity at the first charge/discharge cycle and the discharge specific capacity at the 450th charge/discharge cycle at charge rate and discharge rate of 1C/1C at 45°C.

**Table 2**

| | Example 5 | Example 6 | Comparative Example 2 | Comparative Example 3 |
|---|---|---|---|---|
| discharge capacity @0.5C (Ah) | ∼1.68 | ∼1.67 | ∼1.69 | ∼1.69 |
| discharge capacity @2C (Ah) | ∼1.55 | ∼1.53 | ∼1.65 | ∼1.65 |
| discharge capacity retention (%) | ∼92.3 | ∼91.6 | ∼97.6 | ∼97.6 |
| capacity retention (%) (450th charge/discharge cycle) | ∼88 | ∼89 | ∼76 | ∼85 |

As shown in Table 2, the lithium-ion batteries employing the quasi-solid electrolyte of the disclosure (such as Lithium-ion batteries (1) and (2)) have a discharge capacity (at a discharge rate of 2C) greater than 1.5 Ah and a discharge capacity retention 2C/0.5C) greater than 90%. In addition, the lithium-ion batteries employing the quasi-solid electrolyte of the disclosure (such as Lithium-ion batteries (1) and (2)) have a capacity retention (at 450th charge/discharge cycle) greater than 85%. Therefore, the purpose of extending the life cycle of lithium-ion battery is achieved.

The discharge capacity and discharge capacity retention of Lithium-ion batteries (2) and (6) disclosed in Example 6 and Comparative Example 4 were measured at discharge rate of 0.5C and 2C, and the results are shown in Table 3. In addition, the direct current internal resistance (DCIR) of Lithium-ion batteries (2) and (6) disclosed in Example 6 and Comparative Example 4 were measured, and the results are shown in Table 3. The measurement of direct current internal resistance includes charging the battery with 1C current, standing the battery for 1 hour, and then discharge the battery with 1C current for 3 seconds. Next, the direct current internal resistance is determined by calculating the voltage difference of battery.

**Table 3**

| | Example 6 | Comparative Example 4 |
|---|---|---|
| discharge capacity @0.5C(Ah) | ∼1.67 | ∼1.51 |
| discharge capacity @2C(Ah) | ∼1.53 | ∼1.28 |
| discharge capacity retention (%) | ∼91.6 | ∼84.7 |
| direct current internal resistance (mΩ)@90%SOC | ∼30.2 | ∼61.5 |

In Example 6, Electrolyte composition (2) injected into the pouch cell was subjected to a heating process so that the reactive functional groups of Polymer (1) are reacted to undergo the ring-opening polymerization. In Comparative Example 4, Electrolyte composition (2) injected into the pouch cell was not subjected to a heating process. As shown in Table 3, in comparison with Example 6, the discharge capacity retention of Lithium-ion battery (6) of Comparative Example 4 is reduced to about 84.7%, and the direct current internal resistance of Lithium-ion battery (6) is increased to about 61.5 mΩ.

The discharge capacity and discharge capacity retention of Lithium-ion batteries (1), (3) and (4) disclosed in Examples 5 and 7 and Comparative Example 2 were measured at discharge rate of 0.5C and 2C, and the results are shown in Table 4. In addition, the alternating current internal resistance (ACIR) of Lithium-ion batteries (1), (3) and (4) disclosed in Examples 5 and 7 and Comparative Example 2 were measured by internal resistance tester, and the results are shown in Table 4. In addition, the oxidation current at high voltage of lithium-ion batteries (1), (3) and (4) of Examples 5 and 7 and Comparative Example 2 are measured, and the results are shown in Table 4. The oxidation current at high voltage is measured via linear sweep voltammetry (LSV) by sweeping the potential from 3.0V to 5.5V at a speed of 10mV/s, and the current value at 5.5V is recorded.

**Table 4**

| | Example 5 | Example 7 | Comparative Example 2 |
|---|---|---|---|
| discharge capacity @0.5C(Ah) | ∼1.68 | ∼1.67 | ∼1.69 |
| discharge capacity @2C(Ah) | ∼1.55 | ∼1.57 | ∼1.65 |
| discharge capacity retention (%) | ∼92.3 | ∼94.3 | ∼97.6 |
| alternating current internal resistance (mΩ) | 12.30 | 12.41 | 9.58 |
| oxidation current (mA) | ∼0.0198 | ∼0.0241 | ∼0.058 |

As shown in Table 4, the lithium-ion battery employing the quasi-solid electrolyte of the disclosure (such as lithium-ion batteries (1) and (3)) has a discharge capacity (at 2C) of greater than 1.5 Ah and a discharge capacity retention (2C/0.5C) greater than 90%. Further, the alternating current internal resistance of lithium-ion battery (such as lithium-ion batteries (1) and (3)) is less than 13 mΩ.

In addition, in comparison with Comparative Example 2 (the lithium-ion battery without the quasi-solid electrolyte of the disclosure), the lithium-ion battery employing the quasi-solid electrolyte of the disclosure (such as lithium-ion batteries (1) and (3)) has lower oxidation current.

Accordingly, the quasi-solid electrolyte of the disclosure exhibits superior flame-retardant and electrical properties, and has the ability to inhibit the oxidation reaction at high voltage. As a result, the performance, C-rate discharge ability and safety in use of the lithium-ion battery at high voltage could be improved, and the life cycle of the lithium-ion battery could be prolonged.

It will be clear that various modifications and variations can be made to the disclosed methods and materials. It is intended that the specification and examples be considered as exemplary only, with the true scope of the disclosure being indicated by the following claims and their equivalents.

## Claims

1. An electrolyte composition, comprising:
a component (A), wherein the component (A) is a combination of a first polymer (A1) and a second polymer (A2), or a third polymer (A3), wherein the first polymer (A1) has a repeating unit of Formula (I), the second polymer (A2) has a repeating unit of Formula (II), and the third polymer (A3) has a repeating unit of Formula (I) and a repeating unit of Formula (II) 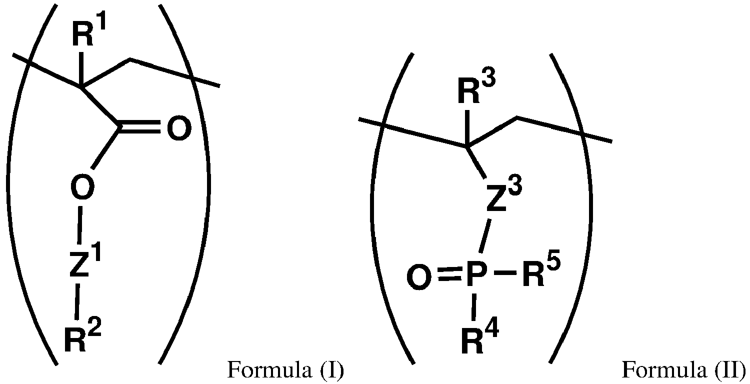 , wherein R¹ is hydrogen or methyl group; R² is oxiranyl group, methyloxiranyl group, glycidyl group, methylglycidyl group, oxetanyl group, or (3,4-epoxycyclohexyl) methyl group; Z¹ is C₁₋₁₀ alkylene group, 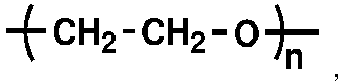 or 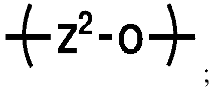 n>1; Z² is C₁₋₁₀ alkylene group; R³ is hydrogen or methyl group; R⁴ and R⁵ are independently C₁₋₁₀ alkyl group, C₁₋₁₀ alkoxy group, C₄₋₈ cycloalkyl group, C₄₋₈ cyclo alkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group, or R⁴ is substituted or non-substituted phenyl group and R⁵ is substituted or non-substituted phenoxy group and R⁴ and R⁵ are combined with the phosphorous atom which they are attached to, to form a 6-membered ring; Z³ is C₁₋₁₀ alkylene group, 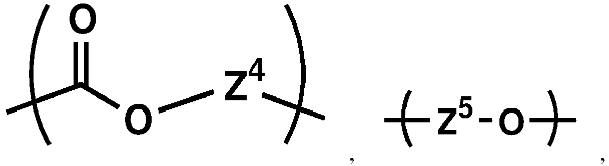 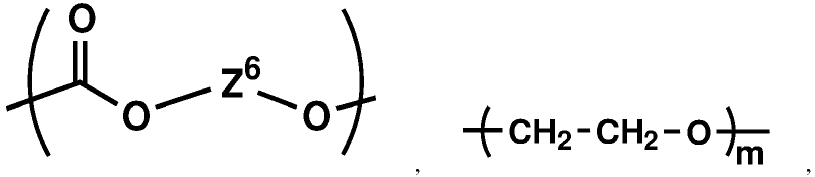 or 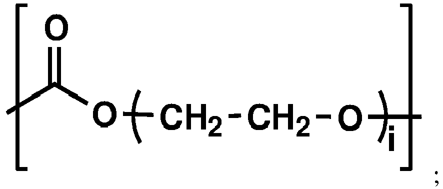 Z⁴, Z⁵, and Z⁶ are independently C₁₋₁₀ alkylene group; m>1; and, i>1;
a component (B), wherein the component (B) is a lithium salt; and
a component (C), wherein the component (C) is a solvent, wherein an amount of component (A) is 1wt% to 10wt%, based on a total weight of component (A), component (B) and component (C).

2. The electrolyte composition as claimed in Claim 1, wherein a weight ratio of the component (B) to the component (C) is 1:19 to 7:13.

3. The electrolyte composition as claimed in at least one of the preceding claims, wherein the repeating unit of Formula (I) is 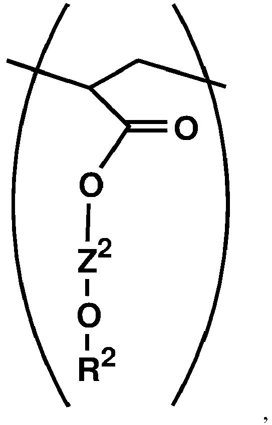 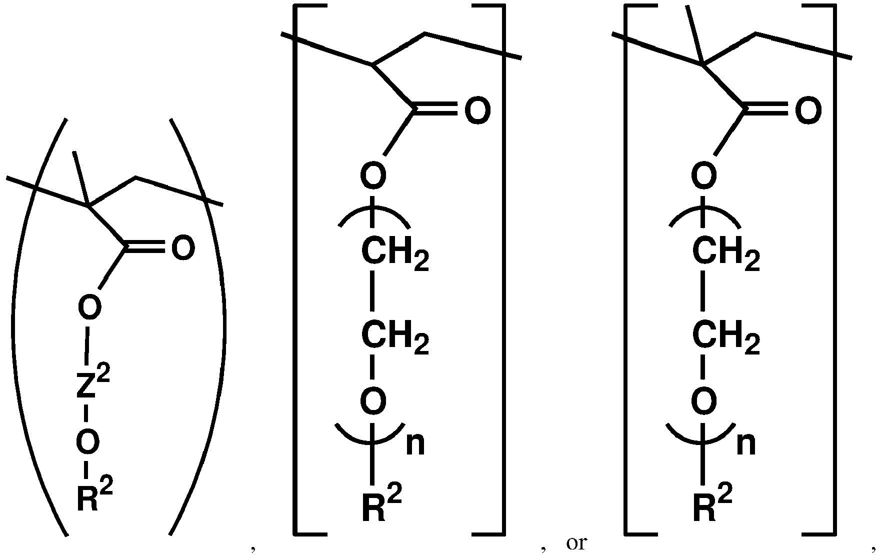 wherein R² is oxiranyl group, methyloxiranyl group, glycidyl group, methylglycidyl group, oxetanyl group, or (3,4-epoxycyclohexyl)methyl group; n>1; and, Z² is C₁₋₁₀ alkylene group; or wherein the repeating unit of Formula (I) is 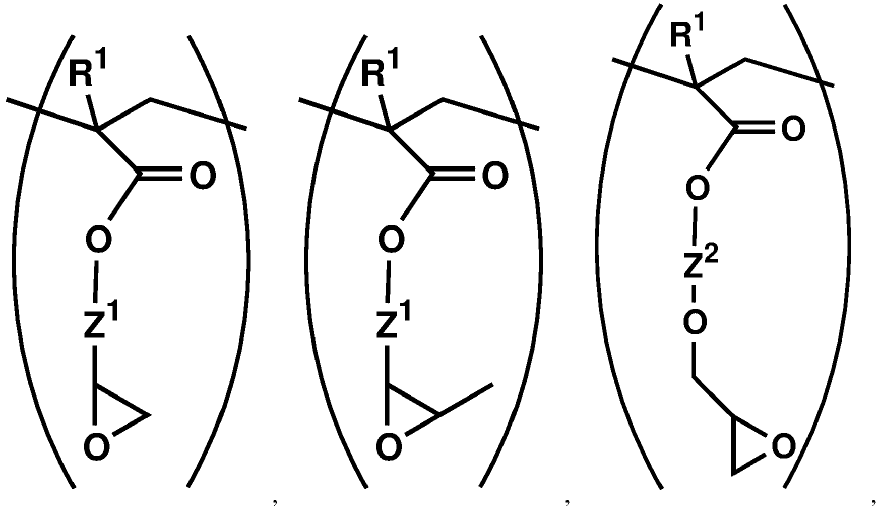 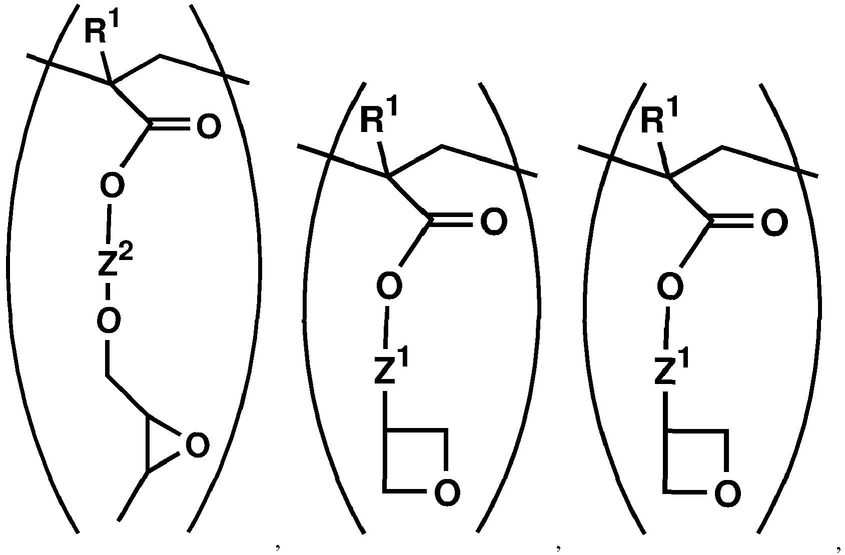 or 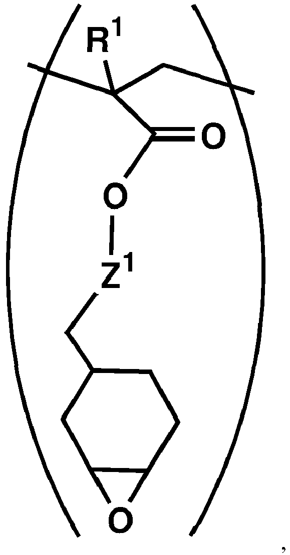 wherein R¹ is hydrogen or methyl group; Z¹ is C₁₋₁₀ alkylene group, 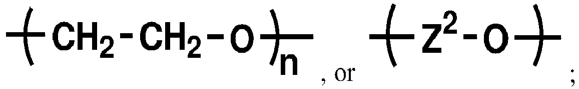 n> 1; and, Z² is C₁₋₁₀ alkylene group.

4. The electrolyte composition as claimed in at least one of the preceding claims, wherein the repeating unit of Formula (II) is 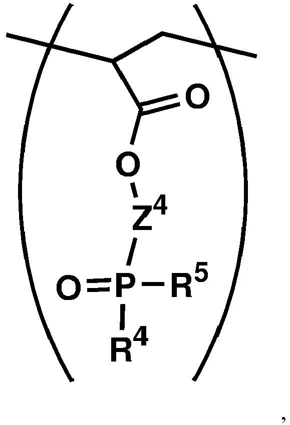 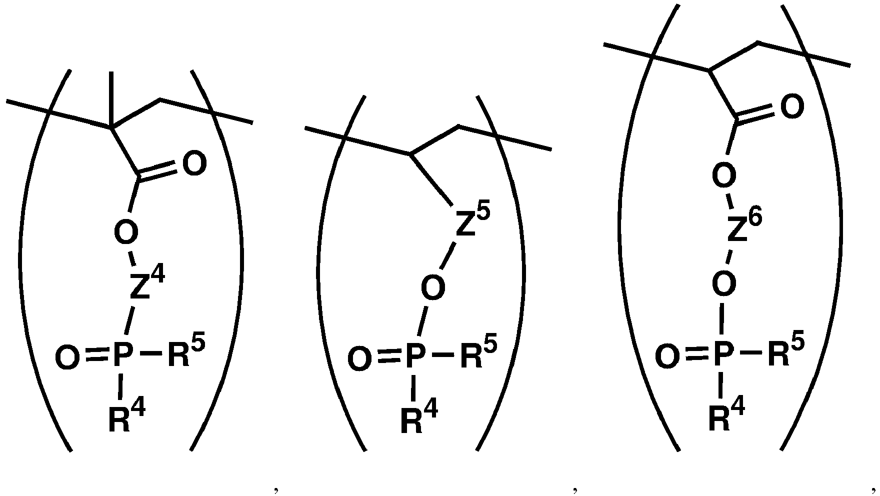 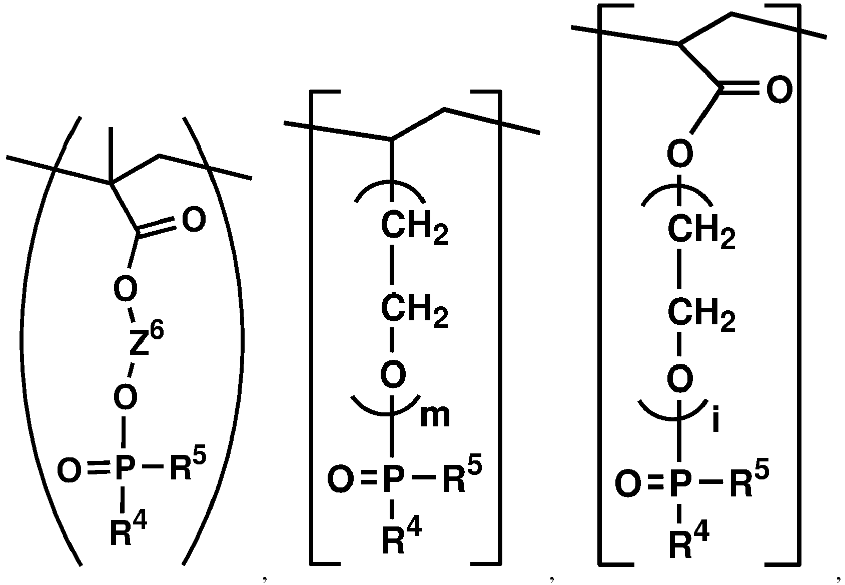 or 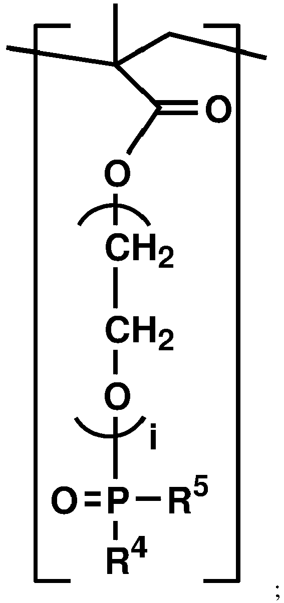 Z⁴, Z⁵ and Z⁶ are independently C₁₋₁₀ alkylene group; m>1; i>1; and, R⁴ and R⁵ are independently C₁₋₁₀ alkyl group, C₁₋₁₀ alkoxy group, C₄₋₈ cycloalkyl group, C₄₋₈ cyclo alkoxy group, C₅₋₁₂ cycloalkyl alkyl group, C₅₋₁₂ cycloalkyl alkoxy group, substituted or non-substituted phenyl group, substituted or non-substituted phenoxy group, substituted or non-substituted benzyl group, or substituted or non-substituted benzyloxy group, or R⁴ is substituted or non-substituted phenyl group and R⁵ is substituted or non-substituted phenoxy group and R⁴ and R⁵ are combined with the phosphorus atom, which they are attached to, to form a 6-membered ring; or wherein the repeating unit of Formula (II) is 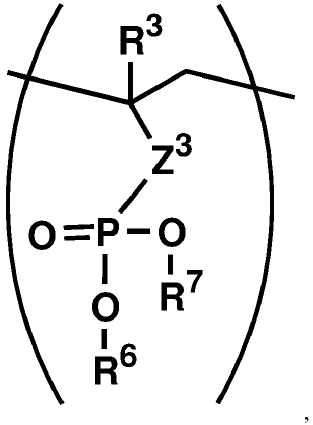 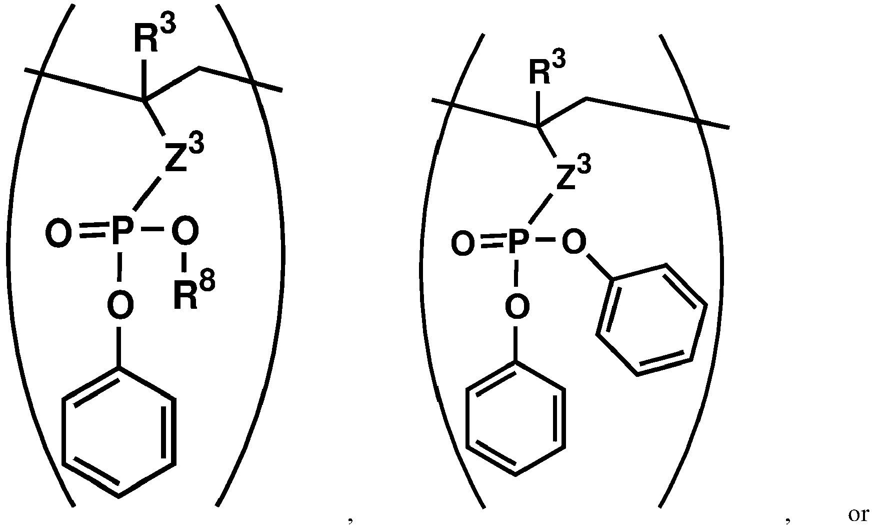 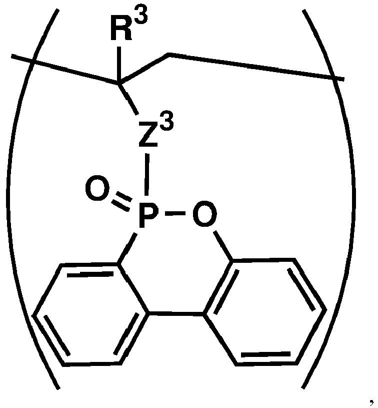 wherein R³ is hydrogen or methyl group; Z³ is C₁₋₁₀ alkylene group, 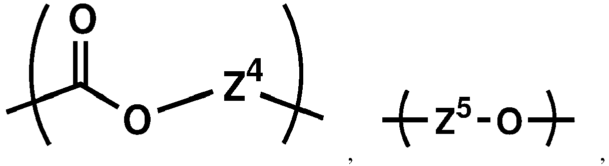 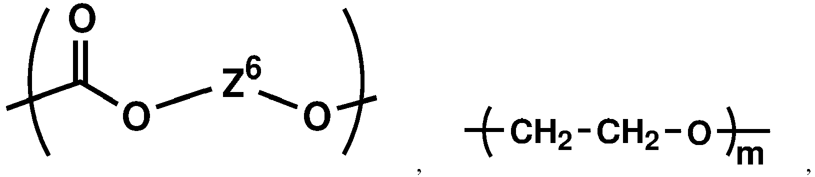 or 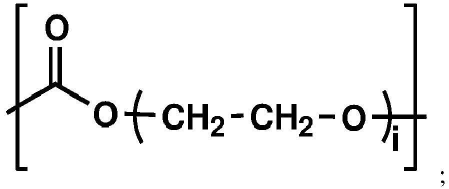 Z⁴, Z⁵, and Z⁶ are independently C₁₋₁₀ alkylene group; m>1; i>1; and, R⁶, R⁷, and R⁸ are independently C₁₋₁₀ alkyl group.

5. The electrolyte composition as claimed in at least one of the preceding claims, wherein the component (A) is a combination of the first polymer (A1) and the second polymer (A2), and a weight ratio of the first polymer (A1) to the second polymer (A2) is 1:4 to 4:1.

6. The electrolyte composition as claimed in at least one of claims 1 to 4, wherein the component (A) is the third polymer (A3), and wherein a number ratio of the repeating unit of Formula (I) to the repeating unit of Formula (II) is 1:4 to 4:1 in the third polymer (A3).

7. The electrolyte composition as claimed in Claim 6, wherein the repeating unit of Formula (I) and the repeating unit of Formula (II) are arranged in a random or block fashion in the third polymer (A3).

8. The electrolyte composition as claimed in at least one of the preceding claims, wherein the lithium salt is LiPF₆, LiClO₄, LiBF₄, LiAsF₆, LiSbF₆, LiTFSI, or a combination thereof.

9. The electrolyte composition as claimed in at least one of the preceding claims, wherein the solvent is 1,2-diethoxyethane, 1,2-dimethoxyethane, 1,2-dibutoxyethane, tetrahydrofuran, 2-methyl tetrahydrofuran, dimethylacetamide (DMAc), N-methyl-2-pyrrolidone (NMP), methyl acetate, ethyl acetate, methyl butyrate, ethyl butyrate, methyl propionate, ethyl proionate, propyl acetate (PA), γ-butyrolactone (GBL), ethylene carbonate (EC), propylene carbonate (PC), diethyl carbonate (DEC), ethylmethyl carbonate (EMC), dimethyl carbonate (DMC), vinylene carbonate, butylene carbonate, 1,3-propanesultone, dipropyl carbonate, or a combination thereof.

10. The electrolyte composition as claimed in at least one of the preceding claims, further comprising:
a component (D), wherein the component (D) is a ring-opening polymerization initiator, wherein an amount of component (D) is 0.1wt% to 5wt%, based on the total weight of component (A), component (B), component (C) and component (D).

11. The electrolyte composition as claimed in Claim 10, wherein the ring-opening polymerization initiator is an ionic compound, wherein a cation of the ionic compound is Na⁺, Li⁺, K⁺, Ag⁺, or NH₄⁺, and an anion of the ionic compound is H₃COO⁻ , OH⁻, BF₄⁻, PF₆⁻, C10₄⁻, CF₃SO₂-, CF₃SO₃-, BF₂(C₂O₄)⁻, AsF₆⁻, or SbF₆.

12. A quasi-solid electrolyte, which is a product of the electrolyte composition as claimed in at least one of the preceding claims via ring-opening polymerization.

13. A lithium-ion battery, comprising:
a positive electrode;
a negative electrode;
a separator, wherein the separator is disposed between the positive electrode and the negative electrode; and
an electrolyte disposed between the positive electrode and the negative electrode, wherein the electrolyte is the quasi-solid electrolyte as claimed in Claim 12.

14. The lithium-ion battery as claimed in Claim 13, wherein the negative electrode comprises a negative electrode active material, and the negative electrode active material is lithium, lithium-containing alloy, transition metal oxide, metastable phase spherical carbon, carbon nanotube, graphite graphene, coke, graphite, carbon black, carbon fiber, mesophase carbon microbead, glassy carbon, lithium-containing compound, silicon-containing compound, tin, tin-containing compound, or a combination thereof.

15. The lithium-ion battery as claimed in at least one of Claims 13 and 14, wherein the positive electrode comprises a positive electrode active material, and the positive electrode active material comprises sulfur, organic sulfide, sulfur-carbon composite, metal-containing lithium oxide, metal-containing lithium sulfide, metal-containing lithium selenide, metal-containing lithium telluride, metal-containing lithium phosphide, metal-containing lithium silicide, metal-containing lithium boride, or a combination thereof, wherein the metal is selected from a group consisting of aluminum, vanadium, titanium, chromium, copper, molybdenum, niobium, iron, nickel, cobalt and manganese.
